# EUROPEAN PATENT APPLICATION

(11) **EP 4 531 481 A1**
(43) Date of publication of application: **02.04.2025**
(21) Application number: 22943035.0
(22) Date of filing: 23.05.2022
(51) Int. Cl.: H04W 74/08

(54) **MULTI-PRACH TRANSMISSION CONFIGURATION METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/094573
(87) International publication number: WO 2023/225829

(57) **Abstract**

Provided in the present disclosure are a multi-PRACH transmission configuration method and apparatus, a device and a storage medium, belonging to the technical field of communications. The method comprises: transmitting a multi-PRACH transmission configuration to a terminal device, the multi-PRACH transmission configuration being used for indicating a multiplexing mode used by the terminal device when transmitting a plurality of PRACHs; and receiving the plurality of PRACHs transmitted by the terminal device by means of the multiplexing mode. The present disclosure provides a processing method for a scenario of "multi-PRACH transmission configuration", so that a terminal device transmits a plurality of PRACHs on PRACH resources by means of a multiplexing mode indicated by the multi-PRACH transmission configuration, thereby improving the coverage of PRACHs.

## Description

### TECHNICAL FIELD

The present disclosure relates to the field of communication technology, in particular to a method and an apparatus for configuring a multi-PRACH (Physical Random Access Channel) transmission, a device and a storage medium.

### BACKGROUND

In a communication system, a poor uplink coverage affects a communication quality between a terminal and a network side device. One of factors affecting the uplink coverage is the PRACH. The terminal can only send one first message (Msg1) transmission in one attempt of random access, and does not involve a multi-PRACH transmission, which makes a poor coverage of the PRACH. Therefore, a method for configuring a multi-PRACH transmission is urgently needed to enable the terminal to transmit a plurality of PRACHs over a PRACH resource in a multiplexing mode indicated by a multi-PRACH transmission configuration, to improve the coverage of the PRACH.

### SUMMARY

The present disclosure provides a method and an apparatus for configuring a multi-PRACH (Physical Random Access Channel) transmission, a device and a storage medium, so that a terminal can transmit a plurality of PRACHs over a PRACH resource a multiplexing mode indicated by a multi-PRACH transmission configuration, to improve the coverage of the PRACH.

According to a first aspect of embodiments of the disclosure, a method for configuring a multi-PRACH transmission is provided, the method is executed by a network side device and includes: sending a multi-PRACH transmission configuration to a terminal, in which the multi-PRACH transmission configuration indicates a multiplexing mode adopted by the terminal in sending a plurality of PRACHs; and receiving the plurality of PRACHs sent by the terminal in the multiplexing mode.

Optionally, in an embodiment of the disclosure, sending the multi-PRACH transmission configuration to the terminal includes at least one of: sending a time division multiplexing (TDM) configuration of the multi-PRACH transmission to the terminal; sending a frequency division multiplexing (FDM) configuration of the multi-PRACH transmission to the terminal; or sending a TDM and FDM configuration of the multi-PRACH transmission to the terminal.

Optionally, in an embodiment of the disclosure, sending the TDM configuration of the multi-PRACH transmission to the terminal includes at least one of: sending a time domain position configuration of TDM to the terminal; or sending a frequency domain position configuration of TDM to the terminal.

Optionally, in an embodiment of the disclosure, sending the time domain position configuration of TDM to the terminal includes at least one of: sending a uniformly-spaced time domain position configuration of a random access opportunity (RO) of TDM to the terminal; or sending a bitmap configuration to the terminal, wherein each bit in a bitmap corresponds to a time domain position of one RO.

Optionally, in an embodiment of the disclosure, sending the multi-PRACH transmission configuration to the terminal includes: sending a physical random access channel-configuration index (prach-ConfigurationIndex) and/or a random access-synchronization signal block-occasion mask index (ra-ssb-OccasionMaskIndex) to the terminal, in which the prach-ConfigurationIndex carries the time domain position configuration of TDM, and the ra-ssb-OccasionMaskIndex carries the time domain position configuration of TDM.

Optionally, in an embodiment of the disclosure, sending the frequency domain position configuration of TDM to the terminal includes at least one of: sending a fixed frequency domain position configuration of TDM to the terminal; or sending a frequency domain position varying configuration of TDM to the terminal.

Optionally, in an embodiment of the disclosure, sending the frequency domain position varying configuration of TDM to the terminal includes at least one of: sending a first frequency domain position varying configuration of TDM to the terminal, wherein the first frequency domain position varying configuration indicates that a frequency domain position is varied by decreasing from a highest frequency domain position in a first frequency domain position set; sending a second frequency domain position varying configuration of TDM to the terminal, wherein the second frequency domain position varying configuration indicates that the frequency domain position is varied by increasing from a lowest frequency domain position in the first frequency domain position set; sending a third frequency domain position varying configuration of TDM to the terminal, wherein the third frequency domain position varying configuration indicates that the frequency domain position is varied by firstly configuring the highest frequency domain position in the first frequency domain position set, and then the lowest frequency domain position, and then a sub-highest frequency domain position, and then a sub-lowest frequency domain position, and so on, until all frequency domain positions in the first frequency domain position set are configured; or sending a fourth frequency domain position varying configuration of TDM to the terminal, wherein the fourth frequency domain position varying configuration indicates that the frequency domain position is varied by firstly configuring the lowest frequency domain position in the first frequency domain position set, and then the highest frequency domain position, and then the sub-lowest frequency domain position, and then the sub-highest frequency domain position, and so on, until all the frequency domain positions are configured.

Optionally, in an embodiment of the disclosure, sending the FDM configuration of the multi-PRACH transmission to the terminal includes at least one of: sending a first multi-PRACH transmission configuration to the terminal, wherein the first multi-PRACH transmission configuration indicates that the multiplexing mode is an FDM mode; sending an FDM rule configuration to the terminal; sending an FDM position configuration to the terminal; or sending a time domain position configuration of a RO of FDM to the terminal.

Optionally, in an embodiment of the disclosure, sending the FDM position configuration to the terminal includes at least one of: sending a bitmap configuration of an available FDM position to the terminal; sending an initial position offset configuration of the available FDM position to the terminal; or sending a configuration of an interval between FDM positions to the terminal.

Optionally, in an embodiment of the disclosure, sending the time domain position configuration of the RO of FDM to the terminal includes at least one of: sending a uniformly-spaced time domain position configuration of the RO of FDM to the terminal; or sending a bitmap configuration to the terminal, wherein each bit of a bitmap corresponds to a time domain position of one RO.

Optionally, in an embodiment of the disclosure, sending the time domain position configuration of the RO of FDM to the terminal includes: sending a prach-ConfigurationIndex and/or a ra-ssb-OccasionMaskIndex to the terminal, wherein the prach-ConfigurationIndex carries the time domain position configuration of the RO of FDM, and the ra-ssb-OccasionMaskIndex carries the time domain position configuration of the RO of FDM.

Optionally, in an embodiment of the disclosure, sending the TDM and FDM configuration of the multi-PRACH transmission to the terminal includes at least one of: sending a second multi-PRACH transmission configuration to the terminal, wherein the second multi-PRACH transmission configuration indicates that the multiplexing mode is a TDM and FDM mode; sending a time domain position configuration of TDM to the terminal; sending a frequency domain position configuration of FDM to the terminal; or sending an FDM rule configuration to the terminal.

Optionally, in an embodiment of the disclosure, the time domain position configuration of TDM includes at least one of: a uniformly-spaced time domain position configuration of a RO of FDM; or a bitmap configuration, wherein each bit of a bitmap corresponds to a time domain position of one RO.

Optionally, in an embodiment of the disclosure, sending the time domain position configuration of FDM to the terminal includes: transmitting a prach-ConfigurationIndex and/or a ra-ssb-OccasionMaskIndex to the terminal, wherein the prach-ConfigurationIndex carries the time domain position configuration of the RO of FDM, and the ra-ssb-OccasionMaskIndex carries the time domain position configuration of the RO of FDM.

Optionally, in an embodiment of the disclosure, the frequency domain position configuration of FDM includes at least one of: a bitmap configuration of an available FDM position; an initial position offset configuration of the available FDM position; or a configuration of an interval between FDM positions.

Optionally, in an embodiment of the disclosure, sending the TDM and FDM configuration of the multi-PRACH transmission to the terminal includes: sending a multi-PRACH transmission quantity configuration of FDM to the terminal.

Optionally, in an embodiment of the disclosure, the multi-PRACH transmission quantity configuration of FDM indicates that a number of multi-PRACH transmissions of FDM is a number of ROs of FDM in the multi-PRACH configuration.

Optionally, in an embodiment of the disclosure, sending the multi-PRACH transmission configuration to the terminal includes: sending the multi-PRACH transmission configuration to the terminal, wherein the multi-PRACH transmission configuration comprises a first multi-PRACH transmission configuration for a contention free random access (CFRA) and/or a second multi-PRACH transmission configuration for a contention based random access (CBRA).

Optionally, in an embodiment of the disclosure, a triggering mode of the CFRA includes at least one of: physical downlink control channel (PDCCH) triggering; switch triggering; beam failure recovery triggering; or primary secondary cell (PScell) addition or change triggering.

Optionally, in an embodiment of the disclosure, sending the multi-PRACH transmission configuration to the terminal includes: sending a PDCCH order to the terminal in response to the CFRA triggered by the PDCCH triggering, wherein the PDCCH order carries the first multi-PRACH transmission configuration.

Optionally, in an embodiment of the disclosure, sending the multi-PRACH transmission configuration to the terminal includes: sending a dedicated random access configuration (RACH-ConfigDedicated) to the terminal in response to the CFRA triggered by the PScell addition or change triggering, wherein a CFRA configuration of the RACH-ConfigDedicated carries the first multi-PRACH transmission configuration.

Optionally, in an embodiment of the sending the multi-PRACH transmission configuration to the terminal includes: sending an RACH-ConfigDedicated to the terminal in response to the CFRA triggered by the switch triggering, wherein a CFRA configuration of the RACH-ConfigDedicated carries the first multi-PRACH transmission configuration.

Optionally, in an embodiment of the disclosure, sending the multi-PRACH transmission configuration to the terminal includes: sending a beam failure recovery configuration (BeamFailureRecoveryConfig) to the terminal in response to the CFRA triggered by the beam failure recovery triggering, wherein the BeamFailureRecoveryConfig carries the first multi-PRACH transmission configuration.

Optionally, in an embodiment of the disclosure, sending the multi-PRACH transmission configuration to the terminal includes: sending the second multi-PRACH transmission configuration to the terminal via a broadcast signaling or a dedicated signaling.

Optionally, in an embodiment of the disclosure, the broadcast signaling includes a system information block 1 (SIB1).

Optionally, in an embodiment of the disclosure, the dedicated signaling includes at least one of: a radio resource control reconfiguration (RRCReconfiguration) message; an RRC resume (RRCResume) message; an RRC release (RRCRelease) message; or an RRC setup (RRCSetup) message.

Optionally, in an embodiment of the disclosure, sending the multi-PRACH transmission configuration to the terminal includes: sending a common random access channel (RACH) configuration to the terminal, wherein the RACH configuration carries the second multi-PRACH transmission configuration.

Optionally, in an embodiment of the disclosure, the RACH configuration includes common RACH resources configured separately on each bandwidth part (BWP).

Optionally, in an embodiment of the disclosure, sending the RACH configuration to the terminal includes: sending a first common random access configuration (RACH-ConfigCommon) in an initial BWP configuration of an SIB1 to the terminal, wherein the first Rach-Configcommon carries the RACH configuration.

Optionally, in an embodiment of the disclosure, sending the RACH configuration to the terminal includes: sending a second RACH-configcommon of a BWP configuration of an RRCReconfiguration message to the terminal, wherein the second Rach-configcommon carries the RACH configuration.

Optionally, in an embodiment of the disclosure, sending the multi-PRACH transmission configuration to the terminal includes: sending a dedicated random access configuration (RACH-ConfigDedicated) to the terminal, wherein the RACH-ConfigDedicated carries the second multi-PRACH transmission configuration.

Optionally, in an embodiment of the disclosure, sending the RACH-ConfigDedicated to the terminal includes: sending a BeamFailureRecoveryConfig to the terminal in response to the CBRA triggered by beam failure recovery triggering, wherein the BeamFailureRecoveryConfig carries the second multi-PRACH transmission configuration configured in the RACH-ConfigDedicated.

Optionally, in an embodiment of the disclosure, sending the multi-PRACH transmission configuration to the terminal includes: sending the RACH-ConfigDedicated to the terminal in response to the CBRA triggered by PScell) addition or change triggering, wherein the RACH-ConfigDedicated carries the second multi-PRACH transmission configuration configured in the RACH-ConfigDedicated.

Optionally, in an embodiment of the disclosure, sending the multi-PRACH transmission configuration to the terminal includes: sending the RACH-ConfigDedicated to the terminal in response to the CBRA triggered by switch triggering, wherein the RACH-ConfigDedicated carries the second multi-PRACH transmission configuration configured in the RACH-ConfigDedicated.

Optionally, in an embodiment of the disclosure, sending the multi-PRACH transmission configuration to the terminal includes: sending a RACH configuration of a feature combination to the terminal, wherein the RACH configuration of the feature combination carries the second multi-PRACH transmission configuration.

Optionally, in an embodiment of the disclosure, the feature combination includes a a coverage enhancement feature, wherein the coverage enhancement feature indicates a coverage enhancement feature supporting the multi-PRACH transmission configured for the CBRA.

Optionally, in an embodiment of the disclosure, the method further includes: receiving PRACH capability information sent by the terminal, wherein the PRACH capability information is capability information indicating the multiplexing mode supported by the terminal.

Optionally, in an embodiment of the disclosure, receiving the PRACH capability information sent by the terminal includes: receiving terminal capability information (UECapabilityInformation) sent by the terminal, wherein the UECapabilityInformation carries the PRACH capability information.

Optionally, in an embodiment of the disclosure, the PRACH capability information includes at least one of: PRACH capability information supporting the multi-PRACH transmission of FDM; PRACH capability information supporting the multi-PRACH transmission of TDM; PRACH capability information supporting a PRACH transmission of FDM and TDM; or PRACH capability information supporting FDM frequency hopping.

Optionally, in an embodiment of the disclosure, after receiving the PRACH capability information sent by the terminal, the method further includes: configuring the multi-PRACH transmission configuration for the terminal via a dedicated signaling based on the PRACH capability information.

According to a second aspect of embodiments of the disclosure, a method for configuring a multi-PRACH transmission is provided, the method is executed by a terminal and includes: receiving a multi-PRACH transmission configuration sent by a network side device, in which the multi-PRACH transmission configuration indicates a multiplexing mode adopted by the terminal in sending a plurality of PRACHs; and sending the plurality of PRACH to the network side device in the multiplexing mode.

Optionally, in an embodiment of the disclosure, sending the plurality of PRACHs to the network side device in the multiplexing mode includes at least one of: sending the plurality of PRACHs to the network side device in a time division multiplexing (TDM) mode; sending the plurality of PRACHs to the network side device in a frequency division multiplexing (FDM) mode; or sending the plurality of PRACHs to the network side device in a TDM and FDM mode.

Optionally, in an embodiment of the disclosure, before receiving the multi-PRACH transmission configuration sent by the network side device, the method further includes: sending PRACH capability information to the network side device, wherein the PRACH capability information is capability information indicating the multiplexing mode supported by the terminal.

Optionally, in an embodiment of the disclosure, sending the PRACH capability information to the network side device includes: sending UECapabilityInformation to the network side device, wherein the UECapabilityInformation carries the PRACH capability information.

Optionally, in an embodiment of the disclosure, the PRACH capability information includes at least one of: PRACH capability information supporting the multi-PRACH transmission of FDM; PRACH capability information supporting the multi-PRACH transmission of TDM; PRACH capability information supporting a PRACH transmission of FDM and TDM; or PRACH capability information supporting FDM frequency hopping.

According to a third aspect of embodiments of the disclosure, an apparatus for configuring a multi-PRACH transmission is provided, including a sending module, and a receiving module. The sending module is configured to send a multi-PRACH transmission configuration to a terminal, in which the multi-PRACH transmission configuration indicates a synchronization signal block (SSB) usage mode corresponding to a PRACH resource used by a terminal in sending a plurality of PRACH transmissions according to the multi-PRACH transmission configuration. The receiving module is configured to receive a plurality of PRACHs transmitted by the terminal over the PRACH resource in the SSB usage mode.

According to a fourth aspect of embodiments of the disclosure, an apparatus for configuring a multi-PRACH transmission is provided, including a receiving module and a sending module. The receiving module is configured to receive a multi-PRACH transmission configuration sent by a network side device, in which the multi-PRACH transmission configuration indicates a multiplexing mode adopted by the terminal in sending a plurality of PRACHs. The sending module is configured to send the plurality of PRACHs to the network side device in the multiplexing mode.

According to a fifth aspect of embodiments of the disclosure, a terminal is provided, including: a processor and a memory for storing computer programs, when the computer programs stored in the memory are executed by the processor, the device is caused to execute the method according to the first aspect of embodiments of the disclosure.

According to a sixth aspect of embodiments of the disclosure, a network side device is provided, including: a processor and a memory for storing computer programs, when the computer programs stored in the memory are executed by the processor, the device is caused to execute the method according to the above second aspect of embodiments of the disclosure.

According to a seventh aspect of embodiments of the disclosure, a communication device is provided, including: a processor and an interface circuit, in which the interface circuit is configured to receive code instructions and transmit the code instructions to the processor; and the processor is configured to run the code instructions to execute the method according to the first aspect of embodiments of the disclosure.

According to an eighth aspect of embodiments of the disclosure, a communication device is provided, including: a processor and an interface circuit, in which the interface circuit is configured to receive code instructions and transmit the code instructions to the processor; and the processor is configured to run the code instructions to execute the method according to the second aspect of embodiments of the disclosure.

According to a ninth aspect of embodiments of the disclosure, a computer-readable storage medium for storing instructions is provided, in which when the instructions are executed, the method according to the first aspect of embodiments of the disclosure is implemented.

According to a tenth aspect of embodiments of the disclosure, a computer-readable storage medium for storing instructions is provided, in which when the instructions are executed, the method according to the second aspect of embodiments of the disclosure is implemented.

In summary, in the embodiments of the disclosure, a multi-PRACH transmission configuration is sent to a terminal, in which the multi-PRACH transmission configuration indicates a multiplexing mode adopted by the terminal in sending a plurality of PRACHs; and the plurality of PRACHs sent by the terminal in the multiplexing mode are received. In the embodiments of the disclosure, the network side device can send the multi-PRACH transmission configuration to the terminal, so that the terminal can transmit a plurality of PRACHs over a PRACH resource in the multiplexing mode indicated by the multi-PRACH transmission configuration, thereby reducing the case that a plurality of PRACHs cannot be transmitted, and improving a success rate of random access. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

### BRIEF DESCRIPTION OF THE DRAWINGS

The above-mentioned and/or other aspects and advantages of the present disclosure may become apparent and easily understandable in the following description in conjunction with the drawings.
FIG. 1 is a flowchart of a method for configuring a multi-PRACH transmission according to an embodiment of the disclosure.
FIG. 2 is a flowchart of a method for configuring a multi-PRACH transmission according to another embodiment of the disclosure.
FIG. 3 is a flowchart of a method for configuring a multi-PRACH transmission according to another embodiment of the disclosure.
FIG. 4 is a flowchart of a method for configuring a multi-PRACH transmission according to another embodiment of the disclosure.
FIG. 5 is a flowchart of a method for configuring a multi-PRACH transmission according to another embodiment of the disclosure.
FIG. 6 is a flowchart of a method for configuring a multi-PRACH transmission according to another embodiment of the disclosure.
FIG. 7 is a flowchart of a method for configuring a multi-PRACH transmission according to another embodiment of the disclosure.
FIG. 8 is a flowchart of a method for configuring a multi-PRACH transmission according to another embodiment of the disclosure.
FIG. 9 is a flowchart of a method for configuring a multi-PRACH transmission according to another embodiment of the disclosure.
FIG. 10 is a flowchart of a method for configuring a multi-PRACH transmission according to another embodiment of the disclosure.
FIG. 11 is a flowchart of a method for configuring a multi-PRACH transmission according to another embodiment of the disclosure.
FIG. 12 is a flowchart of a method for configuring a multi-PRACH transmission according to another embodiment of the disclosure.
FIG. 13 is a flowchart of a method for configuring a multi-PRACH transmission according to another embodiment of the disclosure.
FIG. 14 is a flowchart of a method for configuring a multi-PRACH transmission according to another embodiment of the disclosure.
FIG. 15 is a flowchart of a method for configuring a multi-PRACH transmission according to another embodiment of the disclosure.
FIG. 16 is a flowchart of a method for configuring a multi-PRACH transmission according to another embodiment of the disclosure.
FIG. 17 is a flowchart of a method for configuring a multi-PRACH transmission according to another embodiment of the disclosure.
FIG. 18 is a flowchart of a method for configuring a multi-PRACH transmission according to another embodiment of the disclosure.
FIG. 19 is a flowchart of a method for configuring a multi-PRACH transmission according to another embodiment of the disclosure.
FIG. 20 is a flowchart of a method for configuring a multi-PRACH transmission according to another embodiment of the disclosure.
FIG. 21 is a flowchart of a method for configuring a multi-PRACH transmission according to another embodiment of the disclosure.
FIG. 22 is a block diagram of an apparatus for configuring a multi-PRACH transmission according to an embodiment of the disclosure.
FIG. 23 is a block diagram of an apparatus for configuring a multi-PRACH transmission according to another embodiment of the disclosure.
FIG. 24 is a block diagram of a terminal according to an embodiment of the disclosure.
FIG. 25 is a block diagram of a network side device according to an embodiment of the disclosure.

### DETAILED DESCRIPTION

Embodiments will be described in detail herein, examples of which are illustrated in the accompanying drawings. When the following description refers to the accompanying drawings, the same numbers in different accompanying drawings represent the same or similar elements unless otherwise indicated. The implementations described in the following exemplary embodiments do not represent all implementations consistent with the present disclosure. On the contrary, they are only examples of an apparatus and a method consistent with some aspects of the embodiments of the present disclosure described in the accompanying claims.

Terms used in the embodiments of the present disclosure are only intended to describe specific embodiments, rather than to limit the embodiments of the present disclosure. "A" and "the" in a singular form used in the present disclosure are also intended to include a plural form unless other meanings are explicitly indicated in the context otherwise. It should be further understood that term "and/or" used herein refers to and includes any or all possible combinations of one or more listed relevant items.

It should be understood that terms such as first, second and third may be adopted in the embodiments of the present disclosure to describe various kinds of information, but the information should not be limited to these terms. These terms are only used for distinguishing the same type of information from each other. For example, first information may also be referred to as second information, and similarly, the second information may also be referred to as the first information without departing from the scope of the embodiments of the present disclosure, which depends on a context, for example, the word "if" used herein may be explained as "while" or "when" or "determine... in response to".

The network elements or network functions referred to in the embodiments of the disclosure may be implemented either independently by hardware devices or by software in hardware devices, which are not limited in the embodiments of the disclosure.

In the embodiments of the disclosure, a method and an apparatus for configuring a multi-PRACH transmission, a device and a storage medium will be described in detail with reference to the attached drawings below.

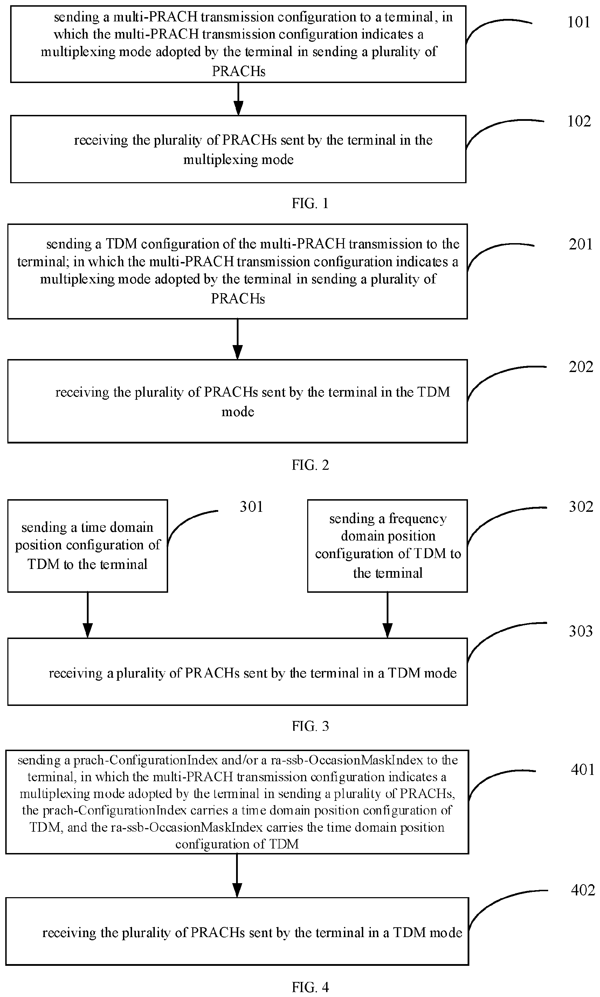

FIG. 1 is a flowchart of a method for configuring a multi-PRACH transmission according to an embodiment of the disclosure. The method is executed by a network side device, as illustrated in FIG. 1, the method includes the following steps.

At step 101: a multi-PRACH transmission configuration is sent to a terminal, in which the multi-PRACH transmission configuration indicates a multiplexing mode adopted by the terminal in sending a plurality of PRACHs.

At step 102: the plurality of PRACHs sent by the terminal in the multiplexing mode is received.

It should be noted that in an embodiment of the disclosure, the terminal can be a device providing voice and/or data connectivity for a user. The terminal may communicate with one or more core networks through a Radio Access Network (RAN), and the terminal may be Internet of Things UE, such as a sensor device, a mobile phone (or referred to as "cellular" phone), and a computer with the Internet of Things UE, such as a fixed, portable, compact, handheld, computer built-in or vehicle-mounted apparatus. For example, it may be a Station (STA), a subscriber unit, a subscriber station, a mobile station, a mobile, a remote station, an access point, a remote UE (remote terminal), an access UE (access terminal), a user apparatus (user terminal), a user agent, a user device, or user equipment (UE). Or, the terminal may also be a device of an unmanned aerial vehicle. Or, the terminal may also be a vehicle-mounted device, such as a driving computer with a wireless communication function or a wireless communication device externally connected to the driving computer. Or, the terminal may also be a roadside device, such as a street lamp, a signal lamp or other roadside devices with a wireless communication function, etc.

In an embodiment of the disclosure, when the terminal sends a preamble, for example, preamble time domain repetition can be performed, that is, multiple preambles are continuously sent in the time domain. A PRACH transmission means that the multiple preambles sent continuously may be transmitted as a whole. The multi-PRACH transmission means processing multiple PRACH transmissions.

In an embodiment of the disclosure, sending the multi-PRACH transmission configuration to the terminal includes at least one of: sending a time division multiplexing (TDM) configuration of the multi-PRACH transmission to the terminal; sending a frequency division multiplexing (FDM) configuration of the multi-PRACH transmission to the terminal; or sending a TDM and FDM configuration of the multi-PRACH transmission to the terminal.

In an embodiment of the disclosure, sending the TDM configuration of the multi-PRACH transmission to the terminal includes at least one of: sending a time domain position configuration of TDM to the terminal; or sending a frequency domain position configuration of TDM to the terminal.

In an embodiment of the disclosure, sending the time domain position configuration of TDM to the terminal includes at least one of: sending a uniformly-spaced time domain position configuration of a random access opportunity (RO) of TDM to the terminal; or sending a bitmap configuration to the terminal, in which each bit in a bitmap corresponds to a time domain position of one RO.

In an embodiment of the disclosure, sending the multi-PRACH transmission configuration to the terminal includes: sending a physical random access channel-configuration index (prach-ConfigurationIndex) and/or a random access-synchronization signal block-occasion mask index (ra-ssb-OccasionMaskIndex) to the terminal, in which the prach-ConfigurationIndex carries the time domain position configuration of TDM, and the ra-ssb-OccasionMaskIndex carries the time domain position configuration of TDM.

In an embodiment of the disclosure, sending the frequency domain position configuration of TDM to the terminal includes at least one of: sending a fixed frequency domain position configuration of TDM to the terminal; or sending a frequency domain position varying configuration of TDM to the terminal.

In an embodiment of the disclosure, sending the frequency domain position varying configuration of TDM to the terminal includes at least one of: sending a first frequency domain position varying configuration of TDM to the terminal, in which the first frequency domain position varying configuration indicates that a frequency domain position is varied by decreasing from a highest frequency domain position in a first frequency domain position set; sending a second frequency domain position varying configuration of TDM to the terminal, in which the second frequency domain position varying configuration indicates that the frequency domain position is varied by increasing from a lowest frequency domain position in the first frequency domain position set; sending a third frequency domain position varying configuration of TDM to the terminal, in which the third frequency domain position varying configuration indicates that the frequency domain position is varied by firstly configuring the highest frequency domain position in the first frequency domain position set, and then the lowest frequency domain position, and then a sub-highest frequency domain position, and then a sub-lowest frequency domain position, and so on, until all frequency domain positions in the first frequency domain position set are configured; or sending a fourth frequency domain position varying configuration of TDM to the terminal, in which the fourth frequency domain position varying configuration indicates that the frequency domain position is varied by firstly configuring the lowest frequency domain position in the first frequency domain position set, and then the highest frequency domain position, and then the sub-lowest frequency domain position, and then the sub-highest frequency domain position, and so on, until all the frequency domain positions are configured.

In an embodiment of the disclosure, sending the FDM configuration of the multi-PRACH transmission to the terminal includes at least one of: sending a first multi-PRACH transmission configuration to the terminal, in which the first multi-PRACH transmission configuration indicates that the multiplexing mode is an FDM mode; sending an FDM rule configuration to the terminal; sending an FDM position configuration to the terminal; or sending a time domain position configuration of a RO of FDM to the terminal.

In an embodiment of the disclosure, sending the FDM position configuration to the terminal includes at least one of: sending a bitmap configuration of an available FDM position to the terminal; sending a configuration of an initial position offset of the available FDM position to the terminal; or sending a configuration of an interval between FDM positions to the terminal.

In an embodiment of the disclosure, sending the time domain position configuration of the RO of FDM to the terminal includes at least one of: sending a uniformly-spaced time domain position configuration of the RO of FDM to the terminal; or sending a bitmap configuration to the terminal, in which each bit of a bitmap corresponds to a time domain position of one RO.

In an embodiment of the disclosure, sending the time domain position configuration of the RO of FDM to the terminal includes: sending a prach-ConfigurationIndex and/or a ra-ssb-OccasionMaskIndex to the terminal, in which the prach-ConfigurationIndex carries the time domain position configuration of the RO of FDM, and the ra-ssb-OccasionMaskIndex carries the time domain position configuration of the RO of FDM.

In an embodiment of the disclosure, sending the TDM and FDM configuration of the multi-PRACH transmission to the terminal includes at least one of: sending a second multi-PRACH transmission configuration to the terminal, in which the second multi-PRACH transmission configuration indicates that the multiplexing mode is a TDM and FDM mode; sending a time domain position configuration of FDM to the terminal; sending a frequency domain position configuration of FDM to the terminal; or sending an FDM rule configuration to the terminal.

In an embodiment of the disclosure, the time domain position configuration of TDM includes at least one of: a uniformly-spaced time domain position configuration of a RO of FDM; or a bitmap configuration, in which each bit of a bitmap corresponds to a time domain position of one RO.

In an embodiment of the disclosure, sending the time domain position configuration of FDM to the terminal includes: sending a prach-ConfigurationIndex and/or a ra-ssb-OccasionMaskIndex to the terminal, in which the prach-ConfigurationIndex carries the time domain position configuration of the RO of FDM, and the ra-ssb-OccasionMaskIndex carries the time domain position configuration of the RO of FDM.

In an embodiment of the disclosure, the frequency domain position configuration of FDM includes at least one of: a bitmap configuration of an available FDM position; a configuration of an initial position offset of the available FDM position; or a configuration of an interval between FDM positions.

In an embodiment of the disclosure, sending the TDM and FDM configuration of the multi-PRACH transmission to the terminal includes: sending a multi-PRACH transmission quantity configuration of FDM to the terminal.

In an embodiment of the disclosure, the multi-PRACH transmission quantity configuration of FDM indicates that a number of multi-PRACH transmissions of FDM is a number of ROs of FDM in the multi-PRACH configuration.

In an embodiment of the disclosure, sending the multi-PRACH transmission configuration to the terminal includes: sending the multi-PRACH transmission configuration to the terminal, in which the multi-PRACH transmission configuration includes a first multi-PRACH transmission configuration for a contention free random access (CFRA) and/or a second multi-PRACH transmission configuration for a contention based random access (CBRA).

In an embodiment of the disclosure, a triggering mode of the CFRA includes at least one of: physical downlink control channel (PDCCH) triggering; switch triggering; beam failure recovery triggering; or primary secondary cell (PScell) addition or change triggering.

In an embodiment of the disclosure, sending the multi-PRACH transmission configuration to the terminal includes: sending a PDCCH order to the terminal in response to the CFRA triggered by the PDCCH triggering, in which the PDCCH order carries the first multi-PRACH transmission configuration.

In an embodiment of the disclosure, sending the multi-PRACH transmission configuration to the terminal includes: sending a dedicated random access configuration (RACH-ConfigDedicated) to the terminal in response to the CFRA triggered by the PScell addition or change triggering, in which a CFRA configuration of the RACH-ConfigDedicated carries the first multi-PRACH transmission configuration.

In an embodiment of the disclosure, sending the multi-PRACH transmission configuration to the terminal includes: sending a RACH-ConfigDedicated to the terminal in response to the CFRA triggered by the switch triggering, in which a CFRA configuration of the RACH-ConfigDedicated carries the first multi-PRACH transmission configuration.

In an embodiment of the disclosure, sending the multi-PRACH transmission configuration to the terminal includes: sending a beam failure recovery configuration (BeamFailureRecoveryConfig) to the terminal in response to the CFRA triggered by the beam failure recovery triggering, in which the BeamFailureRecoveryConfig carries the first multi-PRACH transmission configuration.

In an embodiment of the disclosure, sending the multi-PRACH transmission configuration to the terminal includes: sending the second multi-PRACH transmission configuration to the terminal via a broadcast signaling or a dedicated signaling.

In an embodiment of the disclosure, the broadcast signaling includes a system information block 1 (SIB1).

In an embodiment of the disclosure, the dedicated signaling includes at least one of: a radio resource control reconfiguration (RRCReconfiguration) message; an RRC resume (RRCResume) message; an RRC release (RRCRelease) message; or an RRC setup (RRCSetup) message.

In an embodiment of the disclosure, sending the multi-PRACH transmission configuration to the terminal includes: sending a common random access channel (RACH) configuration to the terminal, in which the RACH configuration carries the second multi-PRACH transmission configuration.

In an embodiment of the disclosure, the RACH configuration includes common RACH resources configured separately on each bandwidth part (BWP).

In an embodiment of the disclosure, sending the RACH configuration to the terminal includes: sending a first random access channel common configuration (RACH-ConfigCommon) in an initial BWP configuration of an SIB1 to the terminal, in which the first RACH-Configcommon carries the RACH configuration.

In an embodiment of the disclosure, sending the RACH configuration to the terminal includes: sending a second RACH-ConfigCommon of a BWP configuration of an RRCReconfiguration message to the terminal, in which the second RACH-ConfigCommon carries the RACH configuration.

In an embodiment of the disclosure, sending the multi-PRACH transmission configuration to the terminal includes: sending a dedicated random access channel configuration (RACH-ConfigDedicated) to the terminal, in which the RACH-ConfigDedicated carries the second multi-PRACH transmission configuration.

In an embodiment of the disclosure, sending the RACH-ConfigDedicated to the terminal includes: sending a BeamFailureRecoveryConfig to the terminal in response to the CBRA triggered by beam failure recovery triggering, in which the BeamFailureRecoveryConfig carries the second multi-PRACH transmission configuration configured in the RACH-ConfigDedicated.

In an embodiment of the disclosure, sending the multi-PRACH transmission configuration to the terminal includes: sending the RACH-ConfigDedicated to the terminal in response to the CBRA triggered by PScell) addition or change triggering, in which the RACH-ConfigDedicated carries the second multi-PRACH transmission configuration configured in the RACH-ConfigDedicated.

In an embodiment of the disclosure, sending the multi-PRACH transmission configuration to the terminal includes: sending the RACH-ConfigDedicated to the terminal in response to the CBRA triggered by switch triggering, in which the RACH-ConfigDedicated carries the second multi-PRACH transmission configuration configured in the RACH-ConfigDedicated.

In an embodiment of the disclosure, sending the multi-PRACH transmission configuration to the terminal includes: sending a RACH configuration of a feature combination to the terminal, in which the RACH configuration of the feature combination carries the second multi-PRACH transmission configuration.

In an embodiment of the disclosure, the feature combination includes a coverage enhancement feature, in which the coverage enhancement feature indicates a coverage enhancement feature supporting the multi-PRACH transmission configured for the CBRA.

In an embodiment of the disclosure, the method further includes: receiving PRACH capability information sent by the terminal, in which the PRACH capability information is capability information indicating the multiplexing mode supported by the terminal.

In an embodiment of the disclosure, receiving the PRACH capability information sent by the terminal includes: receiving terminal capability information (UECapabilityInformation) sent by the terminal, wherein the UECapabilityInformation carries the PRACH capability information.

In an embodiment of the disclosure, the PRACH capability information includes at least one of: PRACH capability information supporting the multi-PRACH transmission of FDM; PRACH capability information supporting the multi-PRACH transmission of TDM; PRACH capability information supporting a PRACH transmission of FDM and TDM; or PRACH capability information supporting FDM frequency hopping.

In an embodiment of the disclosure, after receiving the PRACH capability information sent by the terminal, the method further includes: configuring the multi-PRACH transmission configuration for the terminal via a dedicated signaling based on the PRACH capability information.

In summary, in the embodiment of the disclosure, a multi-PRACH transmission configuration is sent to a terminal, in which the multi-PRACH transmission configuration indicates a multiplexing mode adopted by the terminal in sending a plurality of PRACHs; and the plurality of PRACHs sent by the terminal in the multiplexing mode are received. In the embodiment of the disclosure, the network side device can send the multi-PRACH transmission configuration to the terminal, so that the terminal can transmit a plurality of PRACHs over a PRACH resource in the multiplexing mode indicated by the multi-PRACH transmission configuration, thereby reducing the case that a plurality of PRACHs cannot be transmitted, and improving a success rate of random access. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

FIG. 2 is a flowchart of a method for configuring a multi-PRACH transmission according to an embodiment of the disclosure. The method is executed by a network side device, as illustrated in FIG. 2, the method includes the following steps.

At step 201: a TDM configuration of a multi-PRACH transmission is sent to a terminal, in which the multi-PRACH transmission configuration indicates a multiplexing mode adopted by the terminal in sending a plurality of PRACHs, in which sending the multi-PRACH transmission configuration to the terminal includes at least one of: sending a TDM configuration of the multi-PRACH transmission to the terminal; sending a FDM configuration of the multi-PRACH transmission to the terminal; or sending a TDM and FDM configuration of the multi-PRACH transmission to the terminal.

In an embodiment of the disclosure, sending the TDM configuration of the multi-PRACH transmission to the terminal includes at least one of: sending a time domain position configuration of TDM to the terminal; or sending a frequency domain position configuration of TDM to the terminal.

At step 202: a plurality of PRACHs sent by the terminal in a TDM mode are received.

In summary, in the embodiment of the disclosure, a TDM configuration of the multi-PRACH transmission is sent to the terminal, in which the multi-PRACH transmission configuration indicates a multiplexing mode adopted by the terminal in sending a plurality of PRACHs, and the plurality of PRACHs sent by the terminal in the TDM mode are received. In the embodiment of the disclosure, the network side device can send the TDM configuration to the terminal, so that the terminal can transmit a plurality of PRACHs over a PRACH resource via the TDM mode, thereby reducing the case that a plurality of PRACHs cannot be transmitted, and improving a success rate of random access. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

FIG. 3 is a flowchart of a method for configuring a multi-PRACH transmission according to an embodiment of the disclosure. The method is executed by a network side device, as illustrated in FIG. 3, the method includes the following steps, in which one of steps 301 and 302 is performed.

At step 301: a time domain position configuration of TDM is sent to a terminal.

In an embodiment of the disclosure, sending the time domain position configuration of TDM to the terminal includes at least one of: sending a uniformly-spaced time domain position configuration of a random access opportunity (RO) of TDM to the terminal; or sending a bitmap configuration to the terminal, in which each bit in a bitmap corresponds to a time domain position of one RO.

At step 302: a frequency domain position configuration of TDM is sent to the terminal.

At step 303: a plurality of PRACHs sent by the terminal in a TDM mode are received.

In summary, in the embodiment of the disclosure, a TDM configuration of the multi-PRACH transmission is sent to the terminal, in which the multi-PRACH transmission configuration indicates a multiplexing mode adopted by the terminal in sending a plurality of PRACHs, and the plurality of PRACHs sent by the terminal in the TDM mode are received. In the embodiment of the disclosure, the network side device can send the TDM configuration to the terminal, so that the terminal can transmit a plurality of PRACHs over a PRACH resource via the TDM mode, thereby reducing the case that a plurality of PRACHs cannot be transmitted, and improving a success rate of random access. The embodiment of the disclosure specifically discloses the specific content of the TDM configuration of the multi-PRACH transmission of the multi-PRACH transmission configuration. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

FIG. 4 is a flowchart of a method for configuring a multi-PRACH transmission according to an embodiment of the disclosure. The method is executed by a network side device, as illustrated in FIG. 4, the method includes the following steps.

At step 401: a prach-ConfigurationIndex and/or a ra-ssb-OccasionMaskIndex is sent to a terminal, in which a multi-PRACH transmission configuration indicates a multiplexing mode adopted by the terminal in sending a plurality of PRACHs, the prach-ConfigurationIndex carries a time domain position configuration of TDM, and the ra-ssb-OccasionMaskIndex carries the time domain position configuration of TDM.

At step 402: a plurality of PRACHs sent by the terminal in a TDM mode are received.

In summary, in the embodiment of the disclosure, a prach-ConfigurationIndex and/or a ra-ssb-OccasionMaskIndex is sent to the terminal, and a plurality of PRACHs sent by the terminal in the TDM mode are received. In the embodiment of the disclosure, the network side device can send the TDM configuration to the terminal via the prach-ConfigurationIndex and/or the ra-ssb-OccasionMaskIndex, so that the terminal can receive a plurality of PRACHs over a PRACH resource via the TDM mode, thereby reducing the case that a plurality of PRACHs cannot be transmitted, and improving a success rate of random access. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

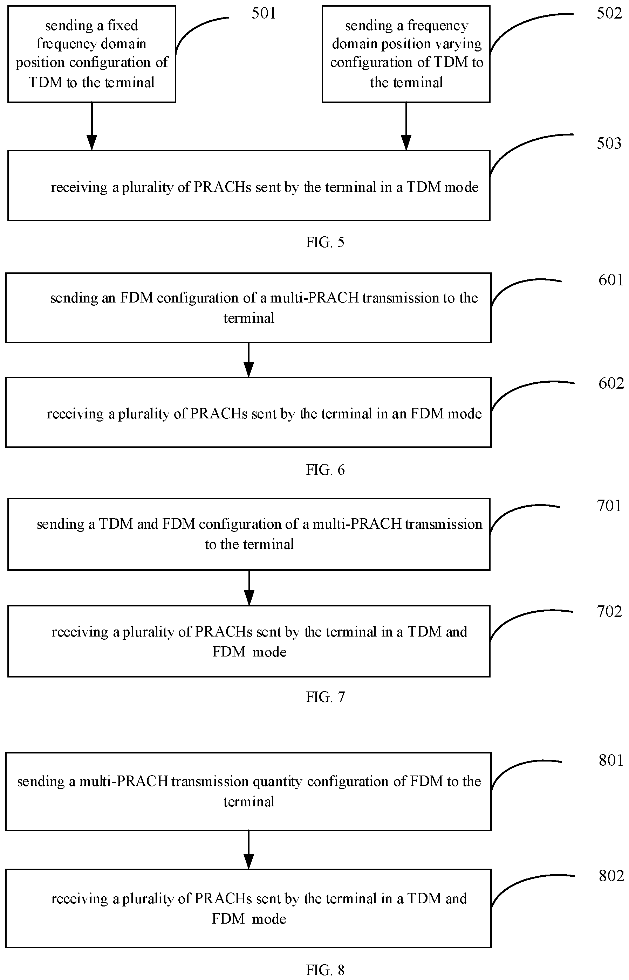

FIG. 5 is a flowchart of a method for configuring a multi-PRACH transmission according to an embodiment of the disclosure. The method is executed by a network side device, as illustrated in FIG. 5, the method includes the following steps, in which one of steps 501 and 502 is implemented.

At step 501: a fixed frequency domain position configuration of TDM is sent to the terminal.

At step 502: a frequency domain position varying configuration of TDM is sent to the terminal.

In an embodiment of the disclosure, sending the frequency domain position varying configuration of TDM to the terminal includes at least one of: sending a first frequency domain position varying configuration of TDM to the terminal, in which the first frequency domain position varying configuration indicates that a frequency domain position is varied by decreasing from a highest frequency domain position in a first frequency domain position set; sending a second frequency domain position varying configuration of TDM to the terminal, in which the second frequency domain position varying configuration indicates that the frequency domain position is varied by increasing from a lowest frequency domain position in the first frequency domain position set; sending a third frequency domain position varying configuration of TDM to the terminal, in which the third frequency domain position varying configuration indicates that the frequency domain position is varied by firstly configuring the highest frequency domain position in the first frequency domain position set, and then the lowest frequency domain position, and then a sub-highest frequency domain position, and then a sub-lowest frequency domain position, and so on, until all frequency domain positions in the first frequency domain position set are configured; or sending a fourth frequency domain position varying configuration of TDM to the terminal, in which the fourth frequency domain position varying configuration indicates that the frequency domain position is varied by firstly configuring the lowest frequency domain position in the first frequency domain position set, and then the highest frequency domain position, and then the sub-lowest frequency domain position, and then the sub-highest frequency domain position, and so on, until all the frequency domain positions are configured.

Exemplarily, in an embodiment of the disclosure, terms like first, second, third, and fourth are used only to indicate differences of the frequency domain position varying configurations. The first frequency domain position varying configuration does not refer specifically to a specific frequency domain position varying configuration. For example, when the highest frequency domain position in the first frequency domain position set changes, the first frequency domain position varying configuration can also change accordingly. The step size corresponding to the first frequency domain position varying configuration can be 1, or 2, or other values.

Exemplarily, in an embodiment of the disclosure, the second frequency domain position varying configuration does not refer specifically to a specific frequency domain position varying configuration. For example, when the lowest frequency domain position in the second frequency domain position set changes, the second frequency domain position varying configuration can also change accordingly. The step size corresponding to the second frequency domain position varying configuration can be 1, or 2, or other values.

At step 503: a plurality of PRACHs sent by the terminal in a TDM mode are received.

In summary, in the embodiment of the disclosure, a TDM configuration of the multi-PRACH transmission is sent to the terminal, in which the multi-PRACH transmission configuration indicates a multiplexing mode adopted by the terminal in sending a plurality of PRACHs, and the plurality of PRACHs sent by the terminal in the TDM mode are received. In the embodiment of the disclosure, the network side device can send the TDM configuration to the terminal, so that the terminal can transmit a plurality of PRACHs over a PRACH resource via the TDM mode, thereby reducing the case that a plurality of PRACHs cannot be transmitted, and improving a success rate of random access. The embodiment of the disclosure specifically discloses that the TDM configuration of the multi-PRACH transmission includes a fixed frequency domain position configuration of TDM and a frequency domain position varying configuration of TDM. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

FIG. 6 is a flowchart of a method for configuring a multi-PRACH transmission according to an embodiment of the disclosure. The method is executed by a network side device, as illustrated in FIG. 6, the method includes the following steps.

At step 601: an FDM configuration of a multi-PRACH transmission is sent to a terminal.

In an embodiment of the disclosure, sending the FDM configuration of the multi-PRACH transmission to the terminal includes at least one of: sending a first multi-PRACH transmission configuration to the terminal, in which the first multi-PRACH transmission configuration indicates that the multiplexing mode is an FDM mode; sending an FDM rule configuration to the terminal; sending the FDM position configuration to the terminal; or sending a time domain position configuration of a RO of FDM to the terminal.

In an embodiment of the disclosure, sending the FDM position configuration to the terminal includes at least one of: sending a bitmap configuration of an available FDM position to the terminal; sending a configuration of an initial position offset of the available FDM position to the terminal; or sending a configuration of an interval between FDM positions to the terminal.

In an embodiment of the disclosure, sending the time domain position configuration of the RO of FDM to the terminal includes at least one of: sending a uniformly-spaced time domain position configuration of the RO of FDM to the terminal; or sending a bitmap configuration to the terminal, in which each bit of a bitmap corresponds to a time domain position of one RO.

In an embodiment of the disclosure, sending the time domain position configuration of the RO of FDM to the terminal includes: sending a prach-ConfigurationIndex and/or a ra-ssb-OccasionMaskIndex to the terminal, in which the prach-ConfigurationIndex carries the time domain position configuration of the RO of FDM, and the ra-ssb-OccasionMaskIndex carries the time domain position configuration of the RO of FDM.

In an embodiment of the disclosure, sending the FDM rule configuration to the terminal includes at least one of: sending a fifth frequency domain position varying configuration of FDM to the terminal, in which the fifth frequency domain position varying configuration indicates that a frequency domain position is varied by decreasing from a highest frequency domain position in a second frequency domain position set; sending a sixth frequency domain position varying configuration of FDM to the terminal, in which the sixth frequency domain position varying configuration indicates that the frequency domain position is varied by increasing from a lowest frequency domain position in the second frequency domain position set; sending a seventh frequency domain position varying configuration of FDM to the terminal, in which the seventh frequency domain position varying configuration indicates that the frequency domain position is varied by firstly configuring the highest frequency domain position in the second frequency domain position set, and then the lowest frequency domain position, and then a sub-highest frequency domain position, and then a sub-lowest frequency domain position, and so on, until all frequency domain positions in the second frequency domain position set are configured; or sending an eighth frequency domain position varying configuration of FDM to the terminal, in which the eighth frequency domain position varying configuration indicates that the frequency domain position is varied by firstly configuring the lowest frequency domain position in the second frequency domain position set, and then the highest frequency domain position, and then the sub-lowest frequency domain position, and then the sub-highest frequency domain position, and so on, until all the frequency domain positions are configured.

At step 602: a plurality of PRACHs sent by the terminal in an FDM mode are received.

In summary, in the embodiment of the disclosure, the FDM configuration of the multi-PRACH transmission is sent to the terminal, and a plurality of PRACHs sent by the terminal in the FDM mode are received. In the embodiment of the disclosure, the network side device can send the FDM configuration of the multi-PRACH transmission to the terminal, so that the terminal can transmit a plurality of PRACHs over a PRACH resource via the FDM mode, thereby reducing the case that a plurality of PRACHs cannot be transmitted, and improving a success rate of random access. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

FIG. 7 is a flowchart of a method for configuring a multi-PRACH transmission according to an embodiment of the disclosure. The method is executed by a network side device, as illustrated in FIG. 7, the method includes the following steps.

At step 701: a TDM and FDM configuration of a multi-PRACH transmission is sent to a terminal.

In an embodiment of the disclosure, sending the TDM and FDM configuration of the multi-PRACH transmission to the terminal includes at least one of: sending a second multi-PRACH transmission configuration to the terminal, in which the second multi-PRACH transmission configuration indicates that the multiplexing mode is a TDM and FDM mode; sending a time domain position configuration of TDM to the terminal; sending a frequency domain position configuration of FDM to the terminal; or sending an FDM rule configuration to the terminal.

In an embodiment of the disclosure, the time domain position configuration of TDM includes at least one of: a uniformly-spaced time domain position configuration of a RO of FDM; or a bitmap configuration, in which each bit of a bitmap corresponds to a time domain position of one RO.

In an embodiment of the disclosure, sending the time domain position configuration of FDM to the terminal includes: sending a prach-ConfigurationIndex and/or a ra-ssb-OccasionMaskIndex to the terminal, in which the prach-ConfigurationIndex carries the time domain position configuration of the RO of FDM, and the ra-ssb-OccasionMaskIndex carries the time domain position configuration of the RO of FDM.

In an embodiment of the disclosure, the frequency domain position configuration of FDM includes at least one of: a bitmap configuration of an available FDM position; a configuration of an initial position offset of the available FDM position; or a configuration of an interval between FDM positions.

In an embodiment of the disclosure, sending the FDM rule configuration to the terminal includes at least one of: sending a ninth frequency domain position varying configuration of FDM to the terminal, in which the ninth frequency domain position varying configuration indicates that a frequency domain position is varied by decreasing from a highest frequency domain position in a third frequency domain position set; sending a tenth frequency domain position varying configuration of FDM to the terminal, in which the tenth frequency domain position varying configuration indicates that the frequency domain position is varied by increasing from a lowest frequency domain position in the third frequency domain position set; sending an eleventh frequency domain position varying configuration of FDM to the terminal, in which the eleventh frequency domain position varying configuration indicates that the frequency domain position is varied by firstly configuring the highest frequency domain position in the third frequency domain position set, and then the lowest frequency domain position, and then a sub-highest frequency domain position, and then a sub-lowest frequency domain position, and so on, until all frequency domain positions in the third frequency domain position set are configured; or sending a twelfth frequency domain position varying configuration of FDM to the terminal, in which the twelfth frequency domain position varying configuration indicates that the frequency domain position is varied by firstly configuring the lowest frequency domain position in the third frequency domain position set, and then the highest frequency domain position, and then the sub-lowest frequency domain position, and then the sub-highest frequency domain position, and so on, until all the frequency domain positions are configured.

In an embodiment of the disclosure, the second frequency domain position set may be the same as or different from the third frequency domain position set.

At step 702: a plurality of PRACHs sent by the terminal in a TDM and FDM mode are received.

In summary, in the embodiment of the disclosure, the TDM and FDM configuration of the multi-PRACH transmission is sent to the terminal, and a plurality of PRACHs sent by the terminal in the TDM and FDM mode are received. In the embodiment of the disclosure, the network side device can send the TDM and FDM configuration of the multi-PRACH transmission to the terminal, so that the terminal can transmit a plurality of PRACHs over a PRACH resource via the TDM and FDM mode, thereby reducing the case that a plurality of PRACHs cannot be transmitted, and improving a success rate of random access. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

FIG. 8 is a flowchart of a method for configuring a multi-PRACH transmission according to an embodiment of the disclosure. The method is executed by a network side device, as illustrated in FIG. 8, the method includes the following steps.

At step 801: a multi-PRACH transmission quantity configuration of FDM is sent to the terminal.

In an embodiment of the disclosure, the multi-PRACH transmission quantity configuration of FDM indicates that a number of multi-PRACH transmissions of FDM is a number of ROs of FDM in the multi-PRACH configuration.

Exemplarily, when the network side device sends the multi-PRACH transmission quantity configuration of FDM to the terminal, it can send the multi-PRACH transmission quantity configuration of FDM indicating that the number of the multi-PRACH transmissions of FDM is the number of the ROs of FDM in the multi-PRACH configuration to the terminal, or the multi-PRACH transmission quantity configuration of FDM indicating that the number of the multi-PRACH transmissions of FDM is the maximum number of the ROs of FDM in the multi-PRACH configuration to the terminal.

At step 802: a plurality of PRACHs sent by the terminal in a TDM and FDM mode are received.

In summary, in the embodiment of the disclosure, the TDM and FDM configuration of the multi-PRACH transmission is sent to the terminal, and a plurality of PRACHs sent by the terminal in the TDM and FDM mode are received. In the embodiment of the disclosure, the network side device can send the TDM and FDM configuration of the multi-PRACH transmission to the terminal, so that the terminal can transmit a plurality of PRACHs over a PRACH resource via the TDM and FDM mode, thereby reducing the case that a plurality of PRACHs cannot be transmitted, and improving a success rate of random access. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

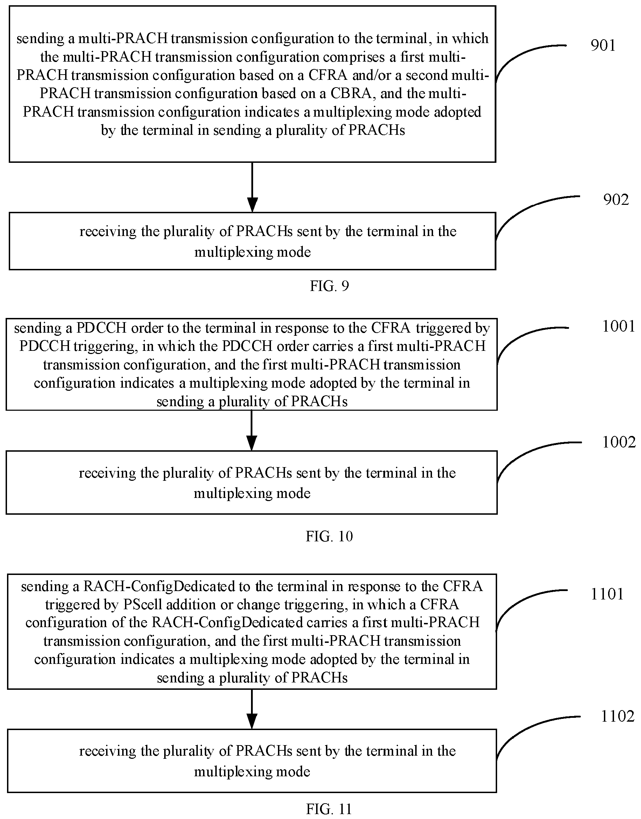

FIG. 9 is a flowchart of a method for configuring a multi-PRACH transmission according to an embodiment of the disclosure. The method is executed by a network side device, as illustrated in FIG. 9, the method includes the following steps.

At step 901: a multi-PRACH transmission configuration is sent to a terminal, in which the multi-PRACH transmission configuration includes a first multi-PRACH transmission configuration for a CFRA and/or a second multi-PRACH transmission configuration for a CBRA, and the multi-PRACH transmission configuration indicates a multiplexing mode adopted by the terminal in sending a plurality of PRACHs.

At step 902: the plurality of PRACHs sent by the terminal in the multiplexing mode are received.

In an embodiment of the disclosure, a triggering mode of the CFRA includes at least one of: physical downlink control channel (PDCCH) triggering; switch triggering; beam failure recovery triggering; or primary secondary cell (PScell) addition or change triggering.

In summary, in the embodiment of the disclosure, the multi-PRACH transmission configuration is sent to the terminal, in which the multi-PRACH transmission configuration includes the first multi-PRACH transmission configuration for the CFRA and/or the second multi-PRACH transmission configuration for the CBRA, and the multi-PRACH transmission configuration indicates the multiplexing mode adopted by the terminal in sending a plurality of PRACHs, and the plurality of PRACHs sent by the terminal in the multiplexing mode are received. In the embodiment of the disclosure, the network side device can transmit the multi-PRACH transmission configuration to the terminal, so that a plurality of PRACHs sent by the terminal via the multiplexing mode are received, thereby reducing the case that a plurality of PRACHs cannot be transmitted, and improving a success rate of random access. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

FIG. 10 is a flowchart of a method for configuring a multi-PRACH transmission according to an embodiment of the disclosure. The method is executed by a network side device, as illustrated in FIG. 10, the method includes the following steps.

At step 1001: a PDCCH order is sent to a terminal in response to a CFRA triggered by PDCCH triggering, in which the PDCCH order carries a first multi-PRACH transmission configuration, and the first multi-PRACH transmission configuration indicates a multiplexing mode adopted by the terminal in sending a plurality of PRACHs.

At step 1002: the plurality of PRACHs sent by the terminal in the multiplexing mode are received.

In summary, in the embodiment of the disclosure, the PDCCH order is sent to the terminal in response to the CFRA triggered by the PDCCH triggering, in which the PDCCH order carries the first multi-PRACH transmission configuration, and the first multi-PRACH transmission configuration indicates the multiplexing mode adopted by the terminal in sending a plurality of PRACHs, and the plurality of PRACHs sent by the terminal in the multiplexing mode are received. In the embodiment of the disclosure, the network side device can send the multi-PRACH transmission configuration to the terminal, so that a plurality of PRACHs sent by the terminal via the multiplexing mode are received, thereby reducing the case that a plurality of PRACHs cannot be transmitted, and improving a success rate of random access. The disclosure specifically discloses that the PDCCH order can be sent to the terminal in response to the CFRA triggered by the PDCCH triggering, so that the first multi-PRACH transmission configuration can be sent to the terminal, thereby improving the accuracy of sending the first multi-PRACH transmission configuration. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

FIG. 11 is a flowchart of a method for configuring a multi-PRACH transmission according to an embodiment of the disclosure. The method is executed by a network side device, as illustrated in FIG. 11, the method includes the following steps.

At step 1101: a RACH-ConfigDedicated is sent to a terminal in response to a CFRA triggered by PScell addition or change triggering, in which a CFRA configuration of the RACH-ConfigDedicated carries a first multi-PRACH transmission configuration, and the first multi-PRACH transmission configuration indicates a multiplexing mode adopted by the terminal in sending a plurality of PRACHs.

At step 1102: the plurality of PRACHs sent by the terminal in the multiplexing mode are received.

In summary, in the embodiment of the disclosure, the RACH-ConfigDedicated is sent to the terminal in response to the CFRA triggered by the PScell addition or change triggering, in which the CFRA configuration of the RACH-ConfigDedicated carries the first multi-PRACH transmission configuration, and the first multi-PRACH transmission configuration indicates the multiplexing mode adopted by the terminal in sending a plurality of PRACHs, and the plurality of PRACHs sent by the terminal in the multiplexing mode are received. In the embodiments of the disclosure, the network side device can send the multi-PRACH transmission configuration to the terminal, to receive a plurality of PRACHs sent by the terminal via the multiplexing mode, thereby reducing the case that a plurality of PRACHs cannot be transmitted, and improving a success rate of random access. The embodiment of the disclosure specifically discloses that in response to the CFRA triggered by the PScell addition or change triggering, the RACH-ConfigDedicated corresponding to the triggering mode may be sent to the terminal, so that the first multi-PRACH transmission configuration can be sent to the terminal, thereby improving the accuracy of sending the first multi-PRACH transmission configuration. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

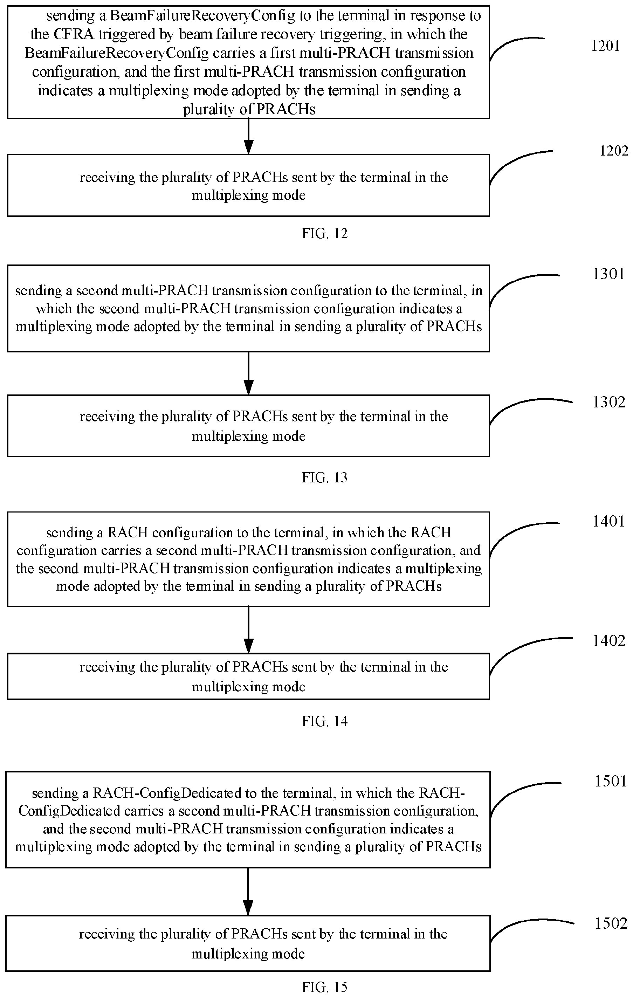

FIG. 12 is a flowchart of a method for configuring a multi-PRACH transmission according to an embodiment of the disclosure. The method is executed by a network side device, as illustrated in FIG. 12, the method includes the following steps.

At step 1201: a BeamFailureRecoveryConfig is sent to a terminal in response to a CFRA triggered by beam failure recovery triggering, in which the BeamFailureRecoveryConfig carries a first multi-PRACH transmission configuration, and the first multi-PRACH transmission configuration indicates a multiplexing mode adopted by the terminal in sending a plurality of PRACHs.

At step 1202: the plurality of PRACHs sent by the terminal in the multiplexing mode are received.

In summary, in the embodiment of the disclosure, the BeamFailureRecoveryConfig is sent to the terminal in response to the CFRA triggered by the beam failure recovery triggering, in which the BeamFailureRecoveryConfig carries the first multi-PRACH transmission configuration, and the first multi-PRACH transmission configuration indicates the multiplexing mode adopted by the terminal in sending a plurality of PRACHs, and the plurality of PRACHs sent by the terminal in the multiplexing mode are received. In the embodiment of the disclosure, the network side device can send the multi-PRACH transmission configuration to the terminal, to receive a plurality of PRACHs sent by the terminal via the multiplexing mode, thereby reducing the case that a plurality of PRACHs cannot be transmitted, and improving a success rate of random access. The embodiment of the disclosure discloses that in response to the CFRA triggered by the beam failure recovery triggering, the BeamFailureRecoveryConfig corresponding to the triggering mode may be sent to the terminal, so that the first multi-PRACH transmission configuration can be sent to the terminal, thereby improving the accuracy of sending the first multi-PRACH transmission configuration. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

FIG. 13 is a flowchart of a method for configuring a multi-PRACH transmission according to an embodiment of the disclosure. The method is executed by a network side device, as illustrated in FIG. 13, the method includes the following steps.

At step 1301: a second multi-PRACH transmission configuration is sent to a terminal via a broadcast signaling or a dedicated signaling, in which the second multi-PRACH transmission configuration indicates a multiplexing mode adopted by the terminal in sending a plurality of PRACHs.

In an embodiment of the disclosure, the broadcast signaling includes a SIB 1.

In an embodiment of the disclosure, the dedicated signaling includes at least one of: an RRCReconfiguration message; an RRCResume message; an RRCRelease message; or an RRCSetup message.

At step 1302: the plurality of PRACHs sent by the terminal via the multiplexing mode are received.

In summary, in the embodiment of the disclosure, the second multi-PRACH transmission configuration is sent to the terminal via the broadcast signaling or the dedicated signaling, in which the second multi-PRACH transmission configuration indicates the multiplexing mode adopted by the terminal in sending a plurality of PRACHs, and the plurality of PRACHs sent by the terminal in the multiplexing mode are received. The embodiment of the disclosure discloses that, the second multi-PRACH transmission configuration is sent via the broadcast signaling or the dedicated signaling, which may improve the accuracy of sending the second multi-PRACH transmission configuration. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

FIG. 14 is a flowchart of a method for configuring a multi-PRACH transmission according to an embodiment of the disclosure. The method is executed by a network side device, as illustrated in FIG. 14, the method includes the following steps.

At step 1401: a RACH configuration is sent to a terminal, in which the RACH configuration carries a second multi-PRACH transmission configuration, and the second multi-PRACH transmission configuration indicates a multiplexing mode adopted by the terminal in sending a plurality of PRACHs.

In an embodiment of the disclosure, the RACH configuration includes common RACH resources configured separately on each bandwidth part (BWP).

In an embodiment of the disclosure, sending the RACH configuration to the terminal includes: sending a first random access channel common configuration (RACH-ConfigCommon) in an initial BWP configuration of an SIB1 to the terminal, in which the first RACH-Configcommon carries the RACH configuration.

Exemplarily, in an embodiment of the disclosure, sending the RACH configuration to the terminal includes: sending a second RACH-ConfigCommon of a BWP configuration of an RRCReconfiguration message to the terminal, in which the second RACH-ConfigCommon carries the RACH configuration.

At step 1402: a plurality of PRACHs sent by the terminal in the multiplexing mode are received.

In summary, in the embodiment of the disclosure, the common RACH configuration is sent to the terminal, in which the RACH configuration carries the second multi-PRACH transmission configuration, and the second multi-PRACH transmission configuration indicates the multiplexing mode adopted by the terminal in sending a plurality of PRACHs, and the plurality of PRACHs sent by the terminal in the multiplexing mode are received. The embodiment of the disclosure discloses that the RACH configuration is sent to the terminal, so that the second multi-PRACH transmission configuration can be sent to the terminal, thereby improving the accuracy of sending the second multi-PRACH transmission configuration. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

FIG. 15 is a flowchart of a method for configuring a multi-PRACH transmission according to an embodiment of the disclosure. The method is executed by a network side device, as illustrated in FIG. 15, the method includes the following steps.

At step 1501: a RACH-ConfigDedicated is sent to a terminal, in which the RACH-ConfigDedicated carries a second multi-PRACH transmission configuration, and the second multi-PRACH transmission configuration indicates a multiplexing mode adopted by the terminal in sending a plurality of PRACHs.

In an embodiment of the disclosure, sending the RACH-ConfigDedicated to the terminal includes the following.

In an embodiment of the disclosure, a BeamFailureRecoveryConfig is sent to the terminal in response to a CBRA triggered by beam failure recovery triggering, in which the BeamFailureRecoveryConfig carries the second multi-PRACH transmission configuration configured in the RACH-ConfigDedicated.

In an embodiment of the disclosure, sending the multi-PRACH transmission configuration to the terminal includes: sending the RACH-ConfigDedicated to the terminal in response to a CBRA triggered by PScell) addition or change triggering, in which the RACH-ConfigDedicated carries the second multi-PRACH transmission configuration configured in the RACH-ConfigDedicated.

In an embodiment of the disclosure, sending the multi-PRACH transmission configuration to the terminal includes: sending the RACH-ConfigDedicated to the terminal in response to a CBRA triggered by switch triggering, in which the RACH-ConfigDedicated carries the second multi-PRACH transmission configuration configured in the RACH-ConfigDedicated.

At step 1502: a plurality of PRACHs sent by the terminal in the multiplexing mode are received.

In summary, in the embodiment of the disclosure, the RACH-ConfigDedicated is sent to the terminal, in which the RACH-ConfigDedicated carries the second multi-PRACH transmission configuration, and the second multi-PRACH transmission configuration indicates the multiplexing mode adopted by the terminal in sending a plurality of PRACHs, and the plurality of PRACHs sent by the terminal in the multiplexing mode are received. The embodiment of the disclosure discloses that, the RACH-ConfigDedicated is sent to the terminal, so that the second multi-PRACH transmission configuration can be sent to the terminal, thereby improving the accuracy of sending the second multi-PRACH transmission configuration. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

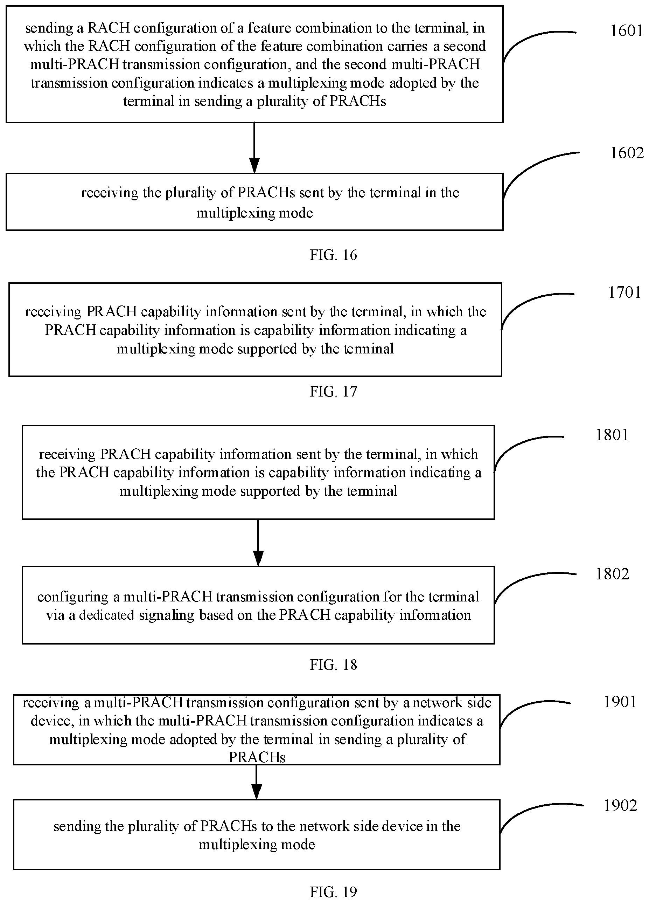

FIG. 16 is a flowchart of a method for configuring a multi-PRACH transmission according to an embodiment of the disclosure. The method is executed by a network side device, as illustrated in FIG. 16, the method includes the following steps.

At step 1601: a RACH configuration of a feature combination is sent to a terminal, in which the RACH configuration of the feature combination carries a second multi-PRACH transmission configuration, and the second multi-PRACH transmission configuration indicates a multiplexing mode adopted by the terminal in sending a plurality of PRACHs.

In an embodiment of the disclosure, the feature combination includes a Coverage Enhancement feature, in which the Coverage Enhancement feature indicates a Coverage Enhancement feature supporting the multi-PRACH transmission configured for the CBRA.

At step 1602: the plurality of PRACHs sent by the terminal in the multiplexing mode are received.

In summary, in the embodiment of the disclosure, the RACH configuration of the feature combination is sent to the terminal, in which the RACH configuration of the feature combination carries the second multi-PRACH transmission configuration, and the second multi-PRACH transmission configuration indicates the multiplexing mode adopted by the terminal in sending a plurality of PRACHs, and the plurality of PRACHs sent by the terminal in the multiplexing mode are received. The embodiment of the disclosure discloses that, the RACH configuration of the feature combination is sent to the terminal, so that the second multi-PRACH transmission configuration can be sent to the terminal, thereby improving the accuracy of sending the second multi-PRACH transmission configuration. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

FIG. 17 is a flowchart of a method for configuring a multi-PRACH transmission according to an embodiment of the disclosure. The method is executed by a network side device, as illustrated in FIG. 17, the method includes the following steps.

At step 1701: PRACH capability information sent by the terminal is received, in which the PRACH capability information is capability information indicating the multiplexing mode supported by the terminal.

In an embodiment of the disclosure, receiving PRACH capability information sent by the terminal includes: receiving UECapabilityInformation sent by the terminal, in which the UECapabilityInformation carries the PRACH capability information.

In an embodiment of the disclosure, the PRACH capability information includes at least one of: PRACH capability information supporting the multi-PRACH transmission of FDM; PRACH capability information supporting the multi-PRACH transmission of TDM; PRACH capability information supporting a PRACH transmission of FDM and TDM; or PRACH capability information supporting FDM frequency hopping.

In summary, in the embodiment of the disclosure, the PRACH capability information sent by the terminal is received, in which the PRACH capability information is the capability information indicating the multiplexing mode supported by the terminal. In the embodiment of the disclosure, the network side device can determine the multiplexing mode based on the PRACH capability information corresponding to the terminal, thereby improving an accuracy of determining the multiplexing mode and an accuracy of the multi-PRACH transmission. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

FIG. 18 is a flowchart of a method for configuring a multi-PRACH transmission according to an embodiment of the disclosure. The method is executed by a network side device, as illustrated in FIG. 18, the method includes the following steps.

At step 1801: PRACH capability information sent by a terminal is received, in which the PRACH capability information is capability information indicating the multiplexing mode supported by the terminal.

At step 1802: a multi-PRACH transmission configuration is configured for the terminal via a dedicated signaling based on the PRACH capability information.

In summary, in the embodiment of the disclosure, the PRACH capability information sent by the terminal is received, in which the PRACH capability information is the capability information indicating the multiplexing mode supported by the terminal, and the multi-PRACH transmission configuration is configured for the terminal via the dedicated signaling based on the PRACH capability information. In the embodiment of the disclosure, the network side device may configure the multi-PRACH transmission configuration for the terminal via the dedicated signaling based on the PRACH capability information corresponding to the terminal, which may improve an accuracy of configuring the multi-PRACH transmission configuration and an accuracy of the multi-PRACH transmission. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

FIG. 19 is a flowchart of a method for configuring a multi-PRACH transmission according to an embodiment of the disclosure. The method is executed by a terminal, as illustrated in FIG. 19, the method includes the following steps.

At step 1901: a multi-PRACH transmission configuration sent by a network side device is received, in which the multi-PRACH transmission configuration indicates a multiplexing mode adopted by the terminal in sending a plurality of PRACHs.

At step 1902: the plurality of PRACHs are sent to the network side device in the multiplexing mode.

In an embodiment of the disclosure, sending a plurality of PRACHs to the network side device in the multiplexing mode includes at least one of: sending a plurality of PRACHs to the network side device via a TDM mode; sending a plurality of PRACHs to the network side device via an FDM mode; or sending a plurality of PRACHs to the network side device via a TDM and FDM mode.

In an embodiment of the disclosure, before receiving the multi-PRACH transmission configuration sent by the network side device, the method further includes: sending PRACH capability information to the network side device, in which the PRACH capability information is capability information indicating the multiplexing mode supported by the terminal.

Exemplarily, in an embodiment of the disclosure, sending the PRACH capability information to the network side device includes: sending UECapabilityInformation to the network side device, in which the UECapabilityInformation carries the PRACH capability information.

Exemplarily, in an embodiment of the disclosure, the PRACH capability information includes at least one of: PRACH capability information supporting the multi-PRACH transmission of FDM; PRACH capability information supporting the multi-PRACH transmission of TDM; PRACH capability information supporting a PRACH transmission of FDM and TDM; or PRACH capability information supporting FDM frequency hopping.

In summary, in the embodiment of the disclosure, the multi-PRACH transmission configuration sent by the network side device is received, in which the multi-PRACH transmission configuration indicates the multiplexing mode adopted by the terminal in sending a plurality of PRACHs, and the plurality of PRACHs are sent to the network side device in the multiplexing mode. In the embodiment of the disclosure, the network side device can send the multi-PRACH transmission configuration to the terminal and the terminal can transmit a plurality of PRACHs over a PRACH resource via the multiplexing mode indicated by the multi-PRACH transmission configuration, thereby reducing the case that a plurality of PRACHs cannot be transmitted, and improving a success rate of random access. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

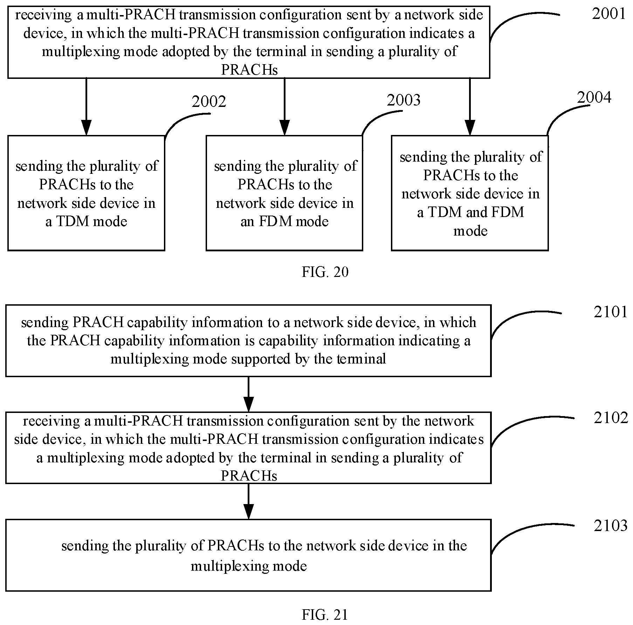

FIG. 20 is a flowchart of a method for configuring a multi-PRACH transmission according to an embodiment of the disclosure. The method is executed by a terminal, as illustrated in FIG. 20, the method includes the following steps.

At step 2001: a multi-PRACH transmission configuration sent by a network side device is received, in which the multi-PRACH transmission configuration indicates a multiplexing mode adopted by the terminal in sending a plurality of PRACHs.

One of the following steps is performed.

At step 2002: a plurality of PRACHs is sent to the network side device in a TDM mode.

At step 2003: a plurality of PRACHs is sent to the network side device in an FDM mode.

At step 2004: a plurality of PRACHs is sent to the network side device in a TDM and FDM mode.

Exemplarily, in an embodiment of the disclosure, the multi-PRACH transmission of the terminal may, for example, adopt different time domain RO resources. For example, the terminal can select an RO of a frequency domain position at a first time domain position of the RO for the multi-PRACH transmission to send the PRACH. The frequency domain position can be selected in the following ways: the terminal freely selects one frequency domain position or the terminal selects one frequency domain position based on the frequency domain position varying configuration. Other detailed descriptions of the frequency domain position varying configuration of TDM can refer to the above embodiments, which will not be elaborated here. The terminal can select an RO of a frequency domain position at a second time domain position of the RO for the multi-PRACH transmission to send the PRACH. The frequency domain position can be selected in the following ways: the terminal freely selects one, or the terminal selects the same frequency domain position as the first transmission, or the terminal selects one second frequency domain position according to the frequency domain position varying configuration, and so on, until the subsequent PRACH transmissions are performed.

Exemplarily, in an embodiment of the disclosure, the multi-PRACH transmission of the terminal may, for example, adopt different frequency domain RO resources. The terminal can determine the time domain resource position of the RO for the multi-PRACH transmission, and the terminal can select X different frequency domain positions at this time domain position to send X PRACHs, where the value of X is equal to the number of times of the multi-PRACH transmission, and X is a positive integer. The X frequency domain positions can be freely selected by the terminal, or selected according to the frequency domain position varying configuration.

Exemplarily, in an embodiment of the disclosure, the multi-PRACH transmission of the terminal may, for example, adopt RO resources in different time domain and different frequency domain. For example, the terminal selects ROs of X frequency domain positions at the first time domain position of the RO for the multi-PRACH transmission to send the PRACH. The X frequency domain positions can be freely selected by the terminal or selected according to the frequency domain position varying configuration. The ways to determine the value of X include at least one of the following ways. First, the terminal determines X based on the multi-PRACH transmission configuration sent by the network side device. Second, the terminal determines X according to the total number of ROs of FDM, for example, X=min (the total number of ROs of FDM, the number of remaining multi-PRACH transmissions). The terminal selects ROs of Y frequency domain positions at the second time domain position of the RO for the multi-PRACH transmission to send the PRACH, and Y frequency domain positions can be freely selected, or the frequency domain position used at the first time domain position is adopted, or Y frequency domain positions other than the X frequency domain positions previously selected are selected according to the frequency domain position varying configuration. The ways to determine the value of Y include at least one of the following ways. First, the terminal determines Y based on the multi-PRACH transmission configuration sent by the network side device. Second, the terminal determines Y according to the total number of ROs of FDM, for example, Y= min (the total number of ROs of FDM, the number of remaining multi-PRACH transmissions), and so on, until subsequent PRACH transmissions are performed.

Other detailed descriptions of steps 2001 to 2004 can be referred to the description of the above embodiments, which will not be elaborated here.

In summary, in the embodiment of the disclosure, the multi-PRACH transmission configuration sent by the network side device is received, in which the multi-PRACH transmission configuration indicates the multiplexing mode adopted by the terminal in sending a plurality of PRACHs, and the plurality of PRACHs are sent to the network side device in the multiplexing mode. The embodiment of the disclosure specifically discloses a specific mode of the multiplexing mode, so that the terminal can transmit a plurality of PRACHs over a PRACH resource via the multiplexing mode indicated by the multi-PRACH transmission configuration, thereby reducing the case that a plurality of PRACHs cannot be transmitted, and improving a success rate of random access. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

FIG. 21 is a flowchart of a method for configuring a multi-PRACH transmission according to an embodiment of the disclosure. The method is executed by a terminal, as illustrated in FIG. 21, the method includes the following steps.

At step 2101: PRACH capability information is sent to a network side device, in which the PRACH capability information is capability information indicating a multiplexing mode supported by the terminal.

At step 2102: a multi-PRACH transmission configuration sent by the network side device is received, in which the multi-PRACH transmission configuration indicates the multiplexing mode adopted by the terminal in sending a plurality of PRACHs.

At step 2103: the plurality of PRACHs are sent to the network side device in the multiplexing mode.

In an embodiment of the disclosure, the PRACH capability information includes at least one of: PRACH capability information supporting the multi-PRACH transmission of FDM; PRACH capability information supporting the multi-PRACH transmission of TDM; PRACH capability information supporting a PRACH transmission of FDM and TDM; or PRACH capability information supporting FDM frequency hopping.

Other detailed descriptions of steps 2101 to 2103 can be referred to the description of the above embodiments, which will not be elaborated here.

In summary, in the embodiment of the disclosure, the PRACH capability information is sent to the network side device, in which the PRACH capability information is the capability information indicating the multiplexing mode supported by the terminal; the multi-PRACH transmission configuration sent by the network side device is received, in which the multi-PRACH transmission configuration indicates the multiplexing mode adopted by the terminal in sending a plurality of PRACHs; and the plurality of PRACHs are sent to the network side device in the multiplexing mode. In the embodiment of the disclosure, by uploading the PRACH capability information to the network side device, an accuracy of configuring the multi-PRACH transmission configuration and an accuracy of the multi-PRACH transmission can be improved. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

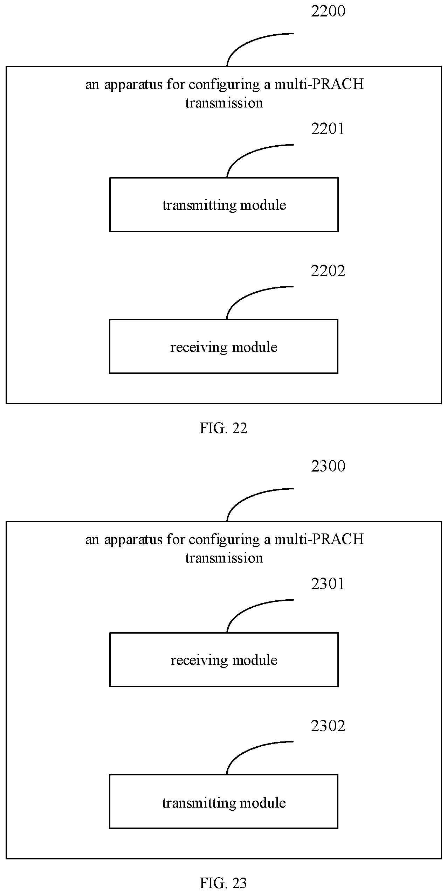

FIG. 22 is a block diagram of an apparatus for configuring a multi-PRACH transmission according to an embodiment of the disclosure. As illustrated in FIG. 22, the apparatus 2200 includes a sending module 2201 and a receiving module 2202.

The sending module 2201 is configured to send a multi-PRACH transmission configuration to a terminal, in which the multi-PRACH transmission configuration indicates a multiplexing mode adopted by the terminal in sending a plurality of PRACHs.

The receiving module 2202 is configured to receive the plurality of PRACHs sent by the terminal in the multiplexing mode.

In summary, in an apparatus for configuring a multi-PRACH transmission in the embodiment of the disclosure, the sending module is configured to send the multi-PRACH transmission configuration to the terminal, in which the multi-PRACH transmission configuration indicates the multiplexing mode adopted by the terminal in sending a plurality of PRACHs; and the receiving module is configured to receive the plurality of PRACHs sent by the terminal in the multiplexing mode. In the embodiment of the disclosure, the apparatus for configuring a multi-PRACH transmission can send the multi-PRACH transmission configuration to the terminal, so that the terminal can transmit a plurality of PRACHs over a PRACH resource via the multiplexing mode indicated by the multi-PRACH transmission configuration, thereby reducing the case that a plurality of PRACHs cannot be transmitted, and improving a success rate of random access. The disclosure provides a method for "a multi-PRACH transmission configuration" to enable the terminal to transmit a plurality of PRACHs over the PRACH resource in the multiplexing mode indicated by the multi-PRACH transmission configuration, to improve the coverage of the PRACH.

In an embodiment of the disclosure, the sending module 2201 is configured to send the multi-PRACH transmission configuration to the terminal by at least one of: sending a time division multiplexing (TDM) configuration of the multi-PRACH transmission to the terminal; sending a frequency division multiplexing (FDM) configuration of the multi-PRACH transmission to the terminal; or sending a TDM and FDM configuration of the multi-PRACH transmission to the terminal.

Optionally, in an embodiment of the disclosure, the sending module 2201 is configured to, when sending a TDM configuration of the multi-PRACH transmission to the terminal, perform at least one of: sending a time domain position configuration of TDM to the terminal; or sending a frequency domain position configuration of TDM to the terminal.

Optionally, in an embodiment of the disclosure, the sending module 2201 is configured to, when sending the time domain position configuration of TDM to the terminal, perform at least one of: sending a uniformly-spaced time domain position configuration of a random access opportunity (RO) of TDM to the terminal; or sending a bitmap configuration to the terminal, in which each bit in a bitmap corresponds to a time domain position of one RO.

Optionally, in an embodiment of the disclosure, the sending module 2201 is configured to, when sending the multi-PRACH transmission configuration to the terminal, specifically perform: sending a physical random access channel-configuration index (prach-ConfigurationIndex) and/or a random access-synchronization signal block-occasion mask index (ra-ssb-OccasionMaskIndex) to the terminal, in which the prach-ConfigurationIndex carries the time domain position configuration of TDM, and the ra-ssb-OccasionMaskIndex carries the time domain position configuration of TDM.

Optionally, in an embodiment of the disclosure, the sending module 2201 is configured to, when sending the frequency domain position configuration of TDM to the terminal, perform at least one of: sending a fixed frequency domain position configuration of TDM to the terminal; or sending a frequency domain position varying configuration of TDM to the terminal.

Optionally, in an embodiment of the disclosure, the sending module 2201 is configured to, when sending the frequency domain position varying configuration of TDM to the terminal, perform at least one of: sending the frequency domain position varying configuration of TDM to the terminal includes at least one of: sending a first frequency domain position varying configuration of TDM to the terminal, in which the first frequency domain position varying configuration indicates that a frequency domain position is varied by decreasing from a highest frequency domain position in a first frequency domain position set; sending a second frequency domain position varying configuration of TDM to the terminal, in which the second frequency domain position varying configuration indicates that the frequency domain position is varied by increasing from a lowest frequency domain position in the first frequency domain position set; sending a third frequency domain position varying configuration of TDM to the terminal, in which the third frequency domain position varying configuration indicates that the frequency domain position is varied by firstly configuring the highest frequency domain position in the first frequency domain position set, and then the lowest frequency domain position, and then a sub-highest frequency domain position, and then a sub-lowest frequency domain position, and so on, until all frequency domain positions in the first frequency domain position set are configured; or sending a fourth frequency domain position varying configuration of TDM to the terminal, in which the fourth frequency domain position varying configuration indicates that the frequency domain position is varied by firstly configuring the lowest frequency domain position in the first frequency domain position set, and then the highest frequency domain position, and then the sub-lowest frequency domain position, and then the sub-highest frequency domain position, and so on, until all the frequency domain positions are configured.

Optionally, in an embodiment of the disclosure, the sending module 2201 is configured to, when sending the FDM configuration of the multi-PRACH transmission to the terminal, perform at least one of: sending a first multi-PRACH transmission configuration to the terminal, in which the first multi-PRACH transmission configuration indicates that the multiplexing mode is an FDM mode; sending an FDM rule configuration to the terminal; sending an FDM position configuration to the terminal; or sending a time domain position configuration of a RO of FDM to the terminal.

Optionally, in an embodiment of the disclosure, the sending module 2201 is configured to, when sending the FDM position configuration to the terminal, perform at least one of: sending a bitmap configuration of an available FDM position to the terminal; sending a configuration of an initial position offset of the available FDM position to the terminal; or sending a configuration of an interval between FDM positions to the terminal.

Optionally, in an embodiment of the disclosure, the sending module 2201 is configured to, when sending the time domain position configuration of the RO of FDM to the terminal, perform at least one of: sending a uniformly-spaced time domain position configuration of the RO of FDM to the terminal; or sending a bitmap configuration to the terminal, in which each bit of a bitmap corresponds to a time domain position of one RO.

Optionally, in an embodiment of the disclosure, the sending module 2201 is configured to, when sending the time domain position configuration of the RO of FDM to the terminal, perform: sending a prach-ConfigurationIndex and/or a ra-ssb-OccasionMaskIndex to the terminal, in which the prach-ConfigurationIndex carries the time domain position configuration of the RO of FDM, and the ra-ssb-OccasionMaskIndex carries the time domain position configuration of the RO of FDM.

Optionally, in an embodiment of the disclosure, the sending module 2201 is configured to, when sending the TDM and FDM configuration of the multi-PRACH transmission to the terminal, perform at least one of: sending a second multi-PRACH transmission configuration to the terminal, in which the second multi-PRACH transmission configuration indicates that the multiplexing mode is a TDM and FDM mode; sending a time domain position configuration of FDM to the terminal; sending a frequency domain position configuration of FDM to the terminal; or sending an FDM rule configuration to the terminal.

Optionally, in an embodiment of the disclosure, the time domain position configuration of TDM includes at least one of: a uniformly-spaced time domain position configuration of a RO of FDM; or a bitmap configuration, in which each bit of a bitmap corresponds to a time domain position of one RO.

Optionally, in an embodiment of the disclosure, the sending module 2201 is configured to, when sending the time domain position configuration of FDM to the terminal, perform: sending a prach-ConfigurationIndex and/or a ra-ssb-OccasionMaskIndex to the terminal, in which the prach-ConfigurationIndex carries the time domain position configuration of the RO of FDM, and the ra-ssb-OccasionMaskIndex carries the time domain position configuration of the RO of FDM.

Optionally, in an embodiment of the disclosure, the frequency domain position configuration of FDM includes at least one of: a bitmap configuration of an available FDM position; a configuration of an initial position offset of the available FDM position; or a configuration of an interval between FDM positions.

Optionally, in an embodiment of the disclosure, the sending module 2201 is configured to, when sending the TDM and FDM configuration of the multi-PRACH transmission to the terminal, specifically perform: sending a multi-PRACH transmission quantity configuration of FDM to the terminal.

Optionally, in an embodiment of the disclosure, the multi-PRACH transmission quantity configuration of FDM indicates that a number of multi-PRACH transmissions of FDM is a number of ROs of FDM in the multi-PRACH configuration.

Optionally, in an embodiment of the disclosure, the sending module 2201 is configured to, when sending the multi-PRACH transmission configuration to the terminal, perform: sending the multi-PRACH transmission configuration to the terminal, in which the multi-PRACH transmission configuration includes a first multi-PRACH transmission configuration for a contention free random access (CFRA) and/or a second multi-PRACH transmission configuration for a contention based random access (CBRA).

Optionally, in an embodiment of the disclosure, a triggering mode of the CFRA includes at least one of: physical downlink control channel (PDCCH) triggering; switch triggering; beam failure recovery triggering; or primary secondary cell (PScell) addition or change triggering.

Optionally, in an embodiment of the disclosure, the sending module 2201 is configured to, when sending the multi-PRACH transmission configuration to the terminal, specifically perform: sending a PDCCH order to the terminal in response to the CFRA triggered by the PDCCH triggering, in which the PDCCH order carries the first multi-PRACH transmission configuration.

Optionally, in an embodiment of the disclosure, the sending module 2201 is configured to, when sending the multi-PRACH transmission configuration to the terminal, specifically perform: sending a dedicated random access configuration (RACH-ConfigDedicated) to the terminal in response to the CFRA triggered by the PScell addition or change triggering, in which a CFRA configuration of the RACH-ConfigDedicated carries the first multi-PRACH transmission configuration.

Optionally, in an embodiment of the disclosure, the sending module 2201 is configured to, when sending the multi-PRACH transmission configuration to the terminal, specifically perform: sending a RACH-ConfigDedicated to the terminal in response to the CFRA triggered by the switch triggering, in which a CFRA configuration of the RACH-ConfigDedicated carries the first multi-PRACH transmission configuration.

Optionally, in an embodiment of the disclosure, the sending module 2201 is configured to, when sending the multi-PRACH transmission configuration to the terminal, specifically perform: sending a beam failure recovery configuration (BeamFailureRecoveryConfig) to the terminal in response to the CFRA triggered by the beam failure recovery triggering, in which the BeamFailureRecoveryConfig carries the first multi-PRACH transmission configuration.

Optionally, in an embodiment of the disclosure, the sending module 2201 is configured to, when sending the multi-PRACH transmission configuration to the terminal, specifically perform: sending the second multi-PRACH transmission configuration to the terminal via a broadcast signaling or a dedicated signaling.

Optionally, in an embodiment of the disclosure, the broadcast signaling includes a system information block 1 (SIB1).

Optionally, in an embodiment of the disclosure, the dedicated signaling includes at least one of: a radio resource control reconfiguration (RRCReconfiguration) message; an RRC resume (RRCResume) message; an RRC release (RRCRelease) message; or an RRC setup (RRCSetup) message.

Optionally, in an embodiment of the disclosure, the sending module 2201 is configured to, when sending the multi-PRACH transmission configuration to the terminal, specifically perform: sending a common random access channel (RACH) configuration to the terminal, in which the RACH configuration carries the second multi-PRACH transmission configuration.

Optionally, in an embodiment of the disclosure, the RACH configuration includes common RACH resources configured separately on each bandwidth part (BWP).

Optionally, in an embodiment of the disclosure, the sending module 2201 is configured to, when sending the RACH configuration to the terminal, specifically perform: sending a first random access channel common configuration (RACH-ConfigCommon) in an initial BWP configuration of an SIB1 to the terminal, in which the first RACH-Configcommon carries the RACH configuration.

Optionally, in an embodiment of the disclosure, the sending module 2201 is configured to, when sending the RACH configuration to the terminal, specifically perform: sending a second RACH-ConfigCommon of a BWP configuration of an RRCReconfiguration message to the terminal, in which the second RACH-ConfigCommon carries the RACH configuration.

Optionally, in an embodiment of the disclosure, the sending module 2201 is configured to, when sending the multi-PRACH transmission configuration to the terminal, specifically perform: sending a dedicated random access channel configuration (RACH-ConfigDedicated) to the terminal, in which the RACH-ConfigDedicated carries the second multi-PRACH transmission configuration.

Optionally, in an embodiment of the disclosure, the sending module 2201 is configured to, when sending the multi-PRACH transmission configuration to the terminal, specifically perform: sending a BeamFailureRecoveryConfig to the terminal in response to the CBRA triggered by beam failure recovery triggering, in which the BeamFailureRecoveryConfig carries the second multi-PRACH transmission configuration configured in the RACH-ConfigDedicated.

Optionally, in an embodiment of the disclosure, the sending module 2201 is configured to, when sending the multi-PRACH transmission configuration to the terminal, specifically perform: sending the RACH-ConfigDedicated to the terminal in response to the CBRA triggered by PScell) addition or change triggering, in which the RACH-ConfigDedicated carries the second multi-PRACH transmission configuration configured in the RACH-ConfigDedicated.

Optionally, in an embodiment of the disclosure, the sending module 2201 is configured to, when sending the multi-PRACH transmission configuration to the terminal, specifically perform: sending the RACH-ConfigDedicated to the terminal in response to the CBRA triggered by switch triggering, in which the RACH-ConfigDedicated carries the second multi-PRACH transmission configuration configured in the RACH-ConfigDedicated.

Optionally, in an embodiment of the disclosure, the sending module 2201 is configured to, when sending the multi-PRACH transmission configuration to the terminal, specifically perform: sending a RACH configuration of a feature combination to the terminal, in which the RACH configuration of the feature combination carries the second multi-PRACH transmission configuration.

Optionally, in an embodiment of the disclosure, the feature combination includes a coverage enhancement feature, in which the coverage enhancement feature indicates a coverage enhancement feature supporting the multi-PRACH transmission configured for the CBRA.

Optionally, in an embodiment of the disclosure, the receiving module 2202 is further configured to receive PRACH capability information sent by the terminal, in which the PRACH capability information is capability information indicating the multiplexing mode supported by the terminal.

Optionally, in an embodiment of the disclosure, the receiving module 2202 is configured to, when receiving PRACH capability information sent by the terminal, specifically perform: receiving UECapabilityInformation sent by the terminal, in which the UECapabilityInformation carries the PRACH capability information.

Optionally, in an embodiment of the disclosure, the PRACH capability information includes at least one of: PRACH capability information supporting the multi-PRACH transmission of FDM; PRACH capability information supporting the multi-PRACH transmission of TDM; PRACH capability information supporting a PRACH transmission of FDM and TDM; or PRACH capability information supporting FDM frequency hopping.

Optionally, in an embodiment of the disclosure, the receiving module 2202 is further configured to, after receiving the PRACH capability information sent by the terminal, perform: configuring the multi-PRACH transmission configuration for the terminal via a dedicated signaling based on the PRACH capability information.

FIG. 23 is a block diagram of an apparatus for configuring a multi-PRACH transmission according to an embodiment of the disclosure. As illustrated in FIG. 23, the apparatus 2300 includes a receiving module 2301 and a sending module 2302.

The receiving module 2301 is configured to receive a multi-PRACH transmission configuration sent by a network side device, in which the multi-PRACH transmission configuration indicates a multiplexing mode adopted by the terminal in sending a plurality of PRACHs.

The sending module 2302 is configured to send the plurality of PRACHs to the network side device in the multiplexing mode.

In summary, in an apparatus for configuring a multi-PRACH transmission in the embodiment of the disclosure, the receiving module can receive the MCGFailureInformation reported by the terminal, in which the MCGFailureInformation carries failure-related information. In the embodiment of the disclosure, when the terminal triggers reporting the MCGFailureInformation, the failure-related information sent by the terminal can be directly received without waiting for the terminal to access the network again and receiving the failure-related information stored in the terminal, thereby reducing the reporting time of the failure-related information. This disclosure provides an apparatus for "a multi-PRACH transmission configuration", to reduce a time of the multi-PRACH transmission configuration, improving an efficiency of the multi-PRACH transmission configuration, and further improving the convenience of parameter adjustment by the network side device.

Optionally, in an embodiment of the disclosure, the sending module 2302 is configured to, when sending the plurality of PRACHs to the network side device in the multiplexing mode, perform at least one of: sending the plurality of PRACHs to the network side device in a time division multiplexing (TDM) mode; sending the plurality of PRACHs to the network side device in a frequency division multiplexing (FDM) mode; or sending the plurality of PRACHs to the network side device in a TDM and FDM mode.

Optionally, in an embodiment of the disclosure, the sending module 2302 is further configured to, before receiving the multi-PRACH transmission configuration sent by the network side device, perform: sending PRACH capability information to the network side device, in which the PRACH capability information is capability information indicating the multiplexing mode supported by the terminal.

Optionally, in an embodiment of the disclosure, the sending module 2302 is configured to, when sending the PRACH capability information to the network side device, specifically perform: sending UECapabilityInformation to the network side device, in which the UECapabilityInformation carries the PRACH capability information.

For example, in an embodiment of the disclosure, the PRACH capability information includes at least one of: PRACH capability information supporting the multi-PRACH transmission of FDM; PRACH capability information supporting the multi-PRACH transmission of TDM; PRACH capability information supporting a PRACH transmission of FDM and TDM; or PRACH capability information supporting FDM frequency hopping.

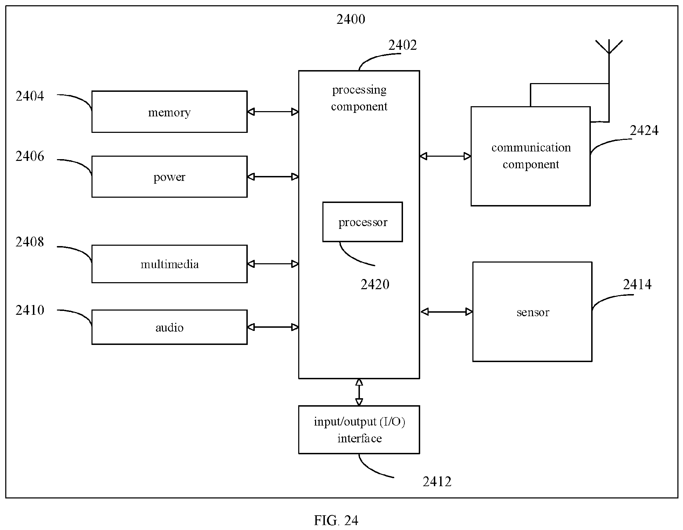

FIG. 24 is a block diagram of a terminal UE 2400 according to an embodiment of the disclosure. For example, UE 2400 can be a mobile phone, computer, digital broadcast terminal, message transceiver, game console, tablet device, medical device, fitness device, personal digital assistant, etc.

Referring to FIG. 24, the UE 2400 may include at least one of the following components: a processing component 2402, a memory 2404, a power 2406, a multimedia 2408, an audio 2410, an input/output (I/O) interface 2412, a sensor 2414, and a communication component 2424.

The processing component 2402 typically controls the overall operation of the UE 2400, such as those associated with display, telephone calls, data communication, camera operation, and recording operations. The processing component 2402 may include at least one processor 2420 to execute instructions to complete all or part of the blocks of the method described above. In addition, the processing component 2402 may include at least one module to facilitate the processing of interactions between the component 2402 and other components. For example, the processing component 2402 may include a multimedia to facilitate the interaction between the multimedia 2408 and the processing component 2402.

The memory 2404 is configured to store various types of data to support operations in the UE 2400. Examples of such data include instructions for any application or method used to operate on the UE 2400, contact data, phone book data, messages, pictures, videos, etc. The memory 2404 can be implemented by any type of volatile or non-volatile memory or a combination of them, such as static random access memory (SRAM), electrically erasable programmable read-only memory (EEPROM), erasable programmable read-only memory (EPROM), programmable read-only memory (PROM), read-only memory (ROM), magnetic memory, flash memory, disk or CD.

The power 2406 provides power to the various components of the UE 2400. The power 2406 may include a power management system, at least one power supply, and other components associated with generating, managing, and distributing power for the UE 2400.

The multimedia 2408 includes a screen providing an output interface between the UE 2400 and the user. In some embodiments, the screen may include a liquid crystal display (LCD) and a touch panel (TP). If the screen includes a touch panel, the screen can be implemented as a touch screen to receive input signals from the user. The touch panel includes at least one touch sensor to sense touch, swiping, and gestures on the touch panel. The touch sensor can not only sense the boundaries of the touch or slide action, but also detect the wake time and pressure associated with the touch or slide operation. In some embodiments, the multimedia 2408 includes a front camera and/or a rear camera. When the UE 2400 is in operation mode, such as shooting mode or video mode, the front camera and/or rear camera can receive external multimedia data. Each front camera and rear camera can be a fixed optical lens system or have focal length and optical zoom capabilities.

The audio 2410 is configured to output and/or input audio signals. For example, the audio 2410 includes a microphone (MIC) that is configured to receive external audio signals when the UE 2400 is in operational mode, such as call mode, recording mode, and speech recognition mode. The received audio signal may be further stored in memory 2404 or transmitted via a communication component 2424. In some embodiments, the audio 2410 also includes a loudspeaker for outputting an audio signal.

The I/O interface 2412 provides an interface between the processing component 2402 and the peripheral interface module, which can be a keyboard, a click wheel, a button, etc. The button may include, but are not limited to: a home button, a volume button, a start button, and a lock button.

The sensor 2414 includes at least one sensor to provide a condition assessment of all aspects of the UE 2400. For example, the sensor 2414 can detect the on/off state of the apparatus 2400, the relative positioning of the components, such as the display and keypad of the UE 2400, the sensor 2414 can also detect changes in the position of the UE 2400 or one of the components of the UE 2400, the presence or absence of contact between the user and the UE 2400, position or acceleration/deceleration of the UE 2400 and temperature change of the UE 2400. The sensor 2414 may include a proximity sensor configured to detect the presence of nearby objects in the absence of any physical contact. The sensor 2414 may also include an optical sensor, such as a CMOS or CCD image sensor, for use in imaging applications. In some embodiments, the sensor 2414 may also include an acceleration sensor, a gyroscope sensor, a magnetic sensor, a pressure sensor, or a temperature sensor.

The communication component 2424 is configured to facilitate wired or wireless communication between the UE 2400 and other devices. The UE 2400 can access wireless networks based on communication standards, such as WiFi, 2G or 3G, or a combination of them. In one exemplary embodiment, the communication component 2424 receives broadcast signals or broadcast-related information from an external broadcast management system via a broadcast channel. In an exemplary embodiment, the communication component 2424 also includes a near-field communication (NFC) module to facilitate short-range communication. For example, the NFC module can be implemented based on radio frequency identification (RFID) technology, infrared data association (IrDA) technology, ultra-wideband (UWB) technology, bluetooth (BT) technology and other technologies.

In an exemplary embodiment, the UE 2400 can be used to perform the above methods by implementing by at least one application specific integrated circuit (ASIC), digital signal processor (DSP), digital signal processing device (DSPD), programmable logic device (PLD), field programmable gate array (FPGA), controller, microcontroller, microprocessor, or other electronic components.

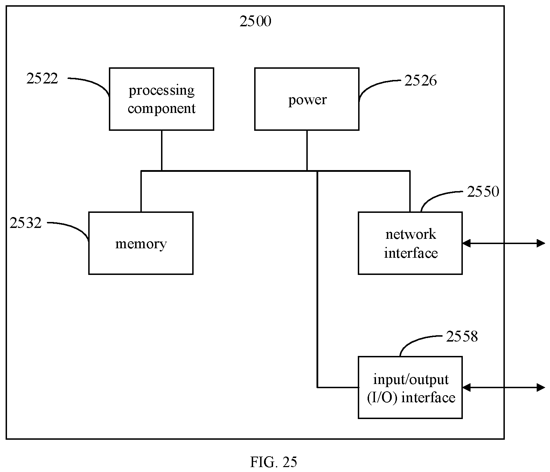

FIG. 25 is a block diagram of a network side device 2500 according to an embodiment of the disclosure. For example, network side device 2500 can be provided as a network side device. Referring to FIG. 25, the network side device 2500 includes a processing component 2522, which further includes at least one processor, and memory resources represented by memory 2532 for storing instructions, such as applications, that can be executed by the processing component 2522. The applications stored in memory 2532 may include one or more modules in which each corresponds to a set of instructions. In addition, the processing component 2522 is configured to execute instructions to execute any one of the methods applied to the network side device, such as the method shown in FIG. 1.

The network side device 2500 may also include a power supply component 2526 configured to perform power management of the network side device 2500, a wired or wireless network interface 2550 configured to connect the network side device 2500 to the network, and an input/output (I/O) interface 2558. The network side device 2500 can operate operating systems based on storage in memory 2532, such as Windows Server ^{™}, Mac OS X^{™}, Unix ^{™}, Linux ^{™}, Free BSD^{™} and so on.

In the embodiments of the disclosure, the method provided in the embodiments of the disclosure is introduced respectively from the perspectives of network side devices and UE. In order to implement the functions in the method provided by the above embodiments, the network side device and UE may include a hardware structure, a software module, or a hardware structure plus a software module to implement the functions. One of these functions can be performed as a hardware structure, a software module, or a hardware structure plus a software module.

In the embodiments of the disclosure, the method provided in the embodiments of the disclosure is introduced respectively from the perspectives of network side devices and UE. In order to implement the functions in the method provided by the above embodiments, the network side device and UE may include a hardware structure, a software module, or a hardware structure plus a software module to implement the functions. One of these functions can be performed as a hardware structure, a software module, or a hardware structure plus a software module.

The embodiments of the disclosure provide a communication device. The communication device may include a transceiver module and a processing module. The transceiver module may include a transmitting module and/or a receiving module, the transmitting module is configured to achieve the transmitting function, the receiving module is configured to achieve the receiving function, and the transceiver module can achieve the transmitting function and/or receiving function.

The communication device may be a terminal (such as the terminal in the preceding method embodiments), a device in a terminal, or a device that can be used with a terminal, or, a communication device may be a network device, an apparatus in a network device, or an apparatus that can be used with a network device.

The embodiments of the disclosure provide another communication device. The communication device can be a network device, or a terminal (such as the terminal in the preceding method embodiments), or a chip, a chip system, a processor, etc. that supports the network device to implement the method, or a chip, a chip system, a processor, etc. that supports the terminal to implement the method. The device is configured to implement the method in the above method embodiments. For details, please refer to the descriptions in the above method embodiments.

The communication device may include one or more processors. The processor can be a general-purpose processor or a special-purpose processor. For example, it may be a baseband processor or a central processing unit. The baseband processor is configured to process communication protocols and communication data, and the central processor is configured to control communication devices (such as base stations, baseband chips, terminals, terminal chips, DU or CU, etc.) to execute computer programs and process computer program data.

Optionally, the communication device may also include one or more memories on each of which a computer program is stored. When the computer program is executed by the processor, the communication device performs the method in the above method embodiments. Optionally, the memory may also store data. The communication device and the memory can be set separately or integrated together.

Optionally, the communication device includes a transceiver and an antenna. The transceiver can be called a transceiving unit, a transceiving machine, or a transceiving circuit, etc., to implement the transceiving function. The transceiver includes a receiver and a transmitter. The receiver can be called a receiver or a receiving circuit, etc., for realizing the receiving function; and the transmitter can be called a transmitter or a transmitting circuit, etc., to implement the transmitting function.

Optionally, the communication device includes one or more interface circuits. The interface circuit is configured to receive a code instruction and transmit the code instruction to the processor. The code instruction is running on the processor runs, the communication device is caused to implement the method in the above embodiments.

When the communication device is a network side device, the processor is configured to execute the method according to any one of FIG. 1 to FIG. 18.

When the communication device is a terminal (such as the terminal in the above method embodiments), the processor is configured to execute the method according to any one of FIG. 19 to FIG. 21.

In an implementation, the processor includes a transceiver for implementing the receiving and transmitting function. For example, the transceiver can be a transceiving circuit, or an interface, or an interface circuit. The transceiving circuits, interfaces, or interface circuits configured to perform the receiving and transmitting function may be separate or integrated together. The transceiving circuit, interface or interface circuit may be configured to read and write code/data, or the transceiving circuit, interface or interface circuit may be configured to transmit signals.

In an embodiment, the processor stores a computer program. When the computer program is running on the processor, the communication device is caused to perform the method in the above embodiments. The computer program may be solidified in the processor. In this way, the processor may be implemented in hardware.

In an embodiment, the communication device includes a circuit that can implement the transmitting or receiving or communicating function in the above method embodiments. The processors and transceivers in the disclosure can be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver can also be manufactured with various IC process technologies, such as a complementary metal oxide semiconductor (CMOS), nMetal-oxide-semiconductor (NMOS), a positive channel metal oxide semiconductor (PMOS), bipolar junction transistor (BJT), a bipolar CMOS (BiCMOS), silicon germanium (SiGe), gallium arsenide (GaAs), etc.

The communication device in the above embodiments can be a network device or a terminal (such as the terminal in the method embodiments), but the scope of the communication device in the disclosure is not limited to this, and the structure of the communication device may not be restricted. The communication device can be an independent device or part of a larger device. For example, the communication device can be:
(1) an independent IC, or a chip, or a chip system or a subsystem;
(2)a collection including one or more IC, optionally, the IC collection may also include storage components for storing data and computer programs;
(3)an ASIC, such as a modem;
(4) modules embedded in other devices;
(5)a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication device can be a chip or a chip system, the chip includes the processor and the interface. There may be one or more processors, and there may be a plurality of interfaces.

Optionally, the chip also includes a memory, which is configured to store necessary computer programs and data.

Those skilled in the art may also understand that the various illustrative logical blocks and steps listed in the embodiments of the disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the disclosure.

The disclosure also provides a computer-readable storage medium on which instructions are stored. When the instruction is executed by a computer, the function of any of the above method embodiments is implemented.

The disclosure also provides a computer program product. When the computer program product is executed by a computer, the functions of any of the above method embodiments is implemented.

**In** the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of embodiments of the disclosure, but also to indicate an order of precedence.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Those skilled in the art, after considering the specification and practicing the invention disclosed herein, will readily think of other embodiments of the disclosure. This disclosure is intended to cover any variation, use, or adaptation of the invention that follows the general principles of the invention and includes common knowledge or conventional technical means in the field of technology that are not disclosed in this disclosure. The specification and embodiments are considered as examples, and the true scope and spirit of this disclosure are indicated by the claims below.

It should be understood that this disclosure is not limited to the precise structure already described above and illustrated in the attached drawings, and that various modifications and changes can be made without departing from its scope. The scope of this disclosure is limited only by the attached claims.

## Claims

1. A method for configuring a multi-physical random access channel (PRACH) transmission, performed by a network side device, comprising:
sending a multi-PRACH transmission configuration to a terminal, wherein the multi-PRACH transmission configuration indicates a multiplexing mode adopted by the terminal in sending a plurality of PRACHs; and
receiving the plurality of PRACHs sent by the terminal in the multiplexing mode.

2. The method according to claim 1, wherein sending the multi-PRACH transmission configuration to the terminal comprises at least one of:
sending a time division multiplexing (TDM) configuration of the multi-PRACH transmission to the terminal;
sending a frequency division multiplexing (FDM) configuration of the multi-PRACH transmission to the terminal; or
sending a TDM and FDM configuration of the multi-PRACH transmission to the terminal.

3. The method according to claim 1, wherein sending the TDM configuration of the multi-PRACH transmission to the terminal comprises at least one of:
sending a time domain position configuration of TDM to the terminal; or
sending a frequency domain position configuration of TDM to the terminal.

4. The method according to claim 3, wherein sending the time domain position configuration of TDM to the terminal comprises at least one of:
sending a uniformly-spaced time domain position configuration of a random access opportunity (RO) of TDM to the terminal; or
sending a bitmap configuration to the terminal, wherein each bit in a bitmap corresponds to a time domain position of one RO.

5. The method according to claim 3, wherein sending the multi-PRACH transmission configuration to the terminal comprises:
sending a physical random access channel-configuration index (prach-ConfigurationIndex) and/or a random access-synchronization signal block-occasion mask index (ra-ssb-OccasionMaskIndex) to the terminal, wherein the prach-ConfigurationIndex carries the time domain position configuration of TDM, and the ra-ssb-OccasionMaskIndex carries the time domain position configuration of TDM.

6. The method according to claim 3, wherein sending the frequency domain position configuration of TDM to the terminal comprises at least one of:
sending a fixed frequency domain position configuration of TDM to the terminal; or
sending a frequency domain position varying configuration of TDM to the terminal.

7. The method according to claim 6, wherein sending the frequency domain position varying configuration of TDM to the terminal comprises at least one of:
sending a first frequency domain position varying configuration of TDM to the terminal, wherein the first frequency domain position varying configuration indicates that a frequency domain position is varied by decreasing from a highest frequency domain position in a first frequency domain position set;
sending a second frequency domain position varying configuration of TDM to the terminal, wherein the second frequency domain position varying configuration indicates that the frequency domain position is varied by increasing from a lowest frequency domain position in the first frequency domain position set;
sending a third frequency domain position varying configuration of TDM to the terminal, wherein the third frequency domain position varying configuration indicates that the frequency domain position is varied by firstly configuring the highest frequency domain position in the first frequency domain position set, and then the lowest frequency domain position, and then a sub-highest frequency domain position, and then a sub-lowest frequency domain position, and so on, until all frequency domain positions in the first frequency domain position set are configured; or
sending a fourth frequency domain position varying configuration of TDM to the terminal, wherein the fourth frequency domain position varying configuration indicates that the frequency domain position is varied by firstly configuring the lowest frequency domain position in the first frequency domain position set, and then the highest frequency domain position, and then the sub-lowest frequency domain position, and then the sub-highest frequency domain position, and so on, until all the frequency domain positions are configured.

8. The method according to claim 2, wherein sending the FDM configuration of the multi-PRACH transmission to the terminal comprises at least one of:
sending a first multi-PRACH transmission configuration to the terminal, wherein the first multi-PRACH transmission configuration indicates that the multiplexing mode is an FDM mode;
sending an FDM rule configuration to the terminal;
sending the FDM position configuration to the terminal; or
sending a time domain position configuration of a RO of FDM to the terminal.

9. The method according to claim 8, wherein sending the FDM position configuration to the terminal comprises at least one of:
sending a bitmap configuration of an available FDM position to the terminal;
sending a configuration of an initial position offset of the available FDM position to the terminal; or
sending a configuration of an interval between FDM positions to the terminal.

10. The method according to claim 8, wherein sending the time domain position configuration of the RO of FDM to the terminal comprises at least one of:
sending a uniformly-spaced time domain position configuration of the RO of FDM to the terminal; or
sending a bitmap configuration to the terminal, wherein each bit of a bitmap corresponds to a time domain position of one RO.

11. The method according to claim 10, wherein sending the time domain position configuration of the RO of FDM to the terminal comprises:
sending a prach-ConfigurationIndex and/or a ra-ssb-OccasionMaskIndex to the terminal, wherein the prach-ConfigurationIndex carries the time domain position configuration of the RO of FDM, and the ra-ssb-OccasionMaskIndex carries the time domain position configuration of the RO of FDM.

12. The method according to claim 2, wherein sending the TDM and FDM configuration of the multi-PRACH transmission to the terminal comprises at least one of:
sending a second multi-PRACH transmission configuration to the terminal, wherein the second multi-PRACH transmission configuration indicates that the multiplexing mode is a TDM and FDM mode;
sending a time domain position configuration of TDM to the terminal;
sending a frequency domain position configuration of FDM to the terminal; or
sending an FDM rule configuration to the terminal.

13. The method according to claim 12, wherein the time domain position configuration of TDM comprises at least one of:
a uniformly-spaced time domain position configuration of a RO of FDM; or
a bitmap configuration, wherein each bit of a bitmap corresponds to a time domain position of one RO.

14. The method according to claim 13, wherein sending the time domain position configuration of FDM to the terminal comprises:
sending a prach-ConfigurationIndex and/or a ra-ssb-OccasionMaskIndex to the terminal, wherein the prach-ConfigurationIndex carries the time domain position configuration of the RO of FDM, and the ra-ssb-OccasionMaskIndex carries the time domain position configuration of the RO of FDM.

15. The method according to claim 12, wherein the frequency domain position configuration of FDM comprises at least one of:
a bitmap configuration of an available FDM position;
a configuration of an initial position offset of the available FDM position; or
a configuration of an interval between FDM positions.

16. The method according to claim 2, wherein sending the TDM and FDM configuration of the multi-PRACH transmission to the terminal comprises:
sending a multi-PRACH transmission quantity configuration of FDM to the terminal.

17. The method according to claim 16, wherein the multi-PRACH transmission quantity configuration of FDM indicates that a number of multi-PRACH transmissions of FDM is a number of ROs of FDM in the multi-PRACH configuration.

18. The method according to claim 1, wherein sending the multi-PRACH transmission configuration to the terminal comprises:
sending the multi-PRACH transmission configuration to the terminal, wherein the multi-PRACH transmission configuration comprises a first multi-PRACH transmission configuration for a contention free random access (CFRA) and/or a second multi-PRACH transmission configuration for a contention based random access (CBRA).

19. The method according to claim 18, wherein a triggering mode of the CFRA comprises at least one of:
physical downlink control channel (PDCCH) triggering;
switch triggering;
beam failure recovery triggering; or
primary secondary cell (PScell) addition or change triggering.

20. The method according to claim 19, wherein sending the multi-PRACH transmission configuration to the terminal comprises:
sending a PDCCH order to the terminal in response to the CFRA triggered by the PDCCH triggering, wherein the PDCCH order carries the first multi-PRACH transmission configuration.

21. The method according to claim 19, wherein sending the multi-PRACH transmission configuration to the terminal comprises:
sending a dedicated random access configuration (RACH-ConfigDedicated) to the terminal in response to the CFRA triggered by the PScell addition or change triggering, wherein a CFRA configuration of the RACH-ConfigDedicated carries the first multi-PRACH transmission configuration.

22. The method according to claim 19, wherein sending the multi-PRACH transmission configuration to the terminal comprises:
sending a RACH-ConfigDedicated to the terminal in response to the CFRA triggered by the switch triggering, wherein a CFRA configuration of the RACH-ConfigDedicated carries the first multi-PRACH transmission configuration.

23. The method according to claim 19, wherein sending the multi-PRACH transmission configuration to the terminal comprises:
sending a beam failure recovery configuration (BeamFailureRecoveryConfig) to the terminal in response to the CFRA triggered by the beam failure recovery triggering, wherein the BeamFailureRecoveryConfig carries the first multi-PRACH transmission configuration.

24. The method according to claim 18, wherein sending the multi-PRACH transmission configuration to the terminal comprises:
sending the second multi-PRACH transmission configuration to the terminal via a broadcast signaling or a dedicated signaling.

25. The method according to claim 24, wherein the broadcast signaling comprises a system information block 1 (SIB1).

26. The method according to claim 24, wherein the dedicated signaling comprises at least one of:
a radio resource control reconfiguration (RRCReconfiguration) message;
an RRC resume (RRCResume) message;
an RRC release (RRCRelease) message; or
an RRC setup (RRCSetup) message.

27. The method according to claim 18, wherein sending the multi-PRACH transmission configuration to the terminal comprises:
sending a common random access channel (RACH) configuration to the terminal, wherein the RACH configuration carries the second multi-PRACH transmission configuration.

28. The method according to claim 27, wherein the RACH configuration comprises common RACH resources configured separately on each bandwidth part (BWP).

29. The method according to claim 28, wherein sending the RACH configuration to the terminal comprises:
sending a first random access channel common configuration (RACH-ConfigCommon) in an initial BWP configuration of an SIB1 to the terminal, wherein the first RACH-Configcommon carries the RACH configuration.

30. The method according to claim 27, wherein sending the RACH configuration to the terminal comprises:
sending a second RACH-ConfigCommon of a BWP configuration of an RRCReconfiguration message to the terminal, wherein the second RACH-ConfigCommon carries the RACH configuration.

31. The method according to claim 18, wherein sending the multi-PRACH transmission configuration to the terminal comprises:
sending a dedicated random access channel configuration (RACH-ConfigDedicated) to the terminal, wherein the RACH-ConfigDedicated carries the second multi-PRACH transmission configuration.

32. The method according to claim 31, wherein sending the RACH-ConfigDedicated to the terminal comprises:
sending a BeamFailureRecoveryConfig to the terminal in response to the CBRA triggered by beam failure recovery triggering, wherein the BeamFailureRecoveryConfig carries the second multi-PRACH transmission configuration configured in the RACH-ConfigDedicated.

33. The method according to claim 31, wherein sending the multi-PRACH transmission configuration to the terminal comprises:
sending the RACH-ConfigDedicated to the terminal in response to the CBRA triggered by PScell) addition or change triggering, wherein the RACH-ConfigDedicated carries the second multi-PRACH transmission configuration configured in the RACH-ConfigDedicated.

34. The method according to claim 31, wherein sending the multi-PRACH transmission configuration to the terminal comprises:
sending the RACH-ConfigDedicated to the terminal in response to the CBRA triggered by switch triggering, wherein the RACH-ConfigDedicated carries the second multi-PRACH transmission configuration configured in the RACH-ConfigDedicated.

35. The method according to claim 18, wherein sending the multi-PRACH transmission configuration to the terminal comprises:
sending a RACH configuration of a feature combination to the terminal, wherein the RACH configuration of the feature combination carries the second multi-PRACH transmission configuration.

36. The method according to claim 35, wherein the feature combination comprises a coverage enhancement feature, wherein the coverage enhancement feature indicates a coverage enhancement feature supporting the multi-PRACH transmission configured for the CBRA.

37. The method according to claim 1, further comprising:
receiving PRACH capability information sent by the terminal, wherein the PRACH capability information is capability information indicating the multiplexing mode supported by the terminal.

38. The method according to claim 37, receiving the PRACH capability information sent by the terminal comprises:
receiving terminal capability information (UECapabilityInformation) sent by the terminal, wherein the UECapabilityInformation carries the PRACH capability information.

39. The method according to claim 37, wherein the PRACH capability information comprises at least one of:
PRACH capability information supporting the multi-PRACH transmission of FDM;
PRACH capability information supporting the multi-PRACH transmission of TDM;
PRACH capability information supporting a PRACH transmission of FDM and TDM; or
PRACH capability information supporting FDM frequency hopping.

40. The method according to claim 37, after receiving the PRACH capability information sent by the terminal, comprising:
configuring the multi-PRACH transmission configuration for the terminal via a dedicated signaling based on the PRACH capability information.

41. A method for configuring a multi-physical random access channel (PRACH) transmission, performed by a terminal, comprising:
receiving a multi-PRACH transmission configuration sent by a network side device, wherein the multi-PRACH transmission configuration indicates a multiplexing mode adopted by the terminal in sending a plurality of PRACHs; and
sending the plurality of PRACHs to the network side device in the multiplexing mode.

42. The method according to claim 37, wherein sending the plurality of PRACHs to the network side device in the multiplexing mode comprises at least one of:
sending the plurality of PRACHs to the network side device in a time division multiplexing (TDM) mode;
sending the plurality of PRACHs to the network side device in a frequency division multiplexing (FDM) mode; or
sending the plurality of PRACHs to the network side device in a TDM and FDM mode.

43. The method according to claim 37, before receiving the multi-PRACH transmission configuration sent by the network side device, further comprising:
sending PRACH capability information to the network side device, wherein the PRACH capability information is capability information indicating the multiplexing mode supported by the terminal.

44. The method according to claim 43, wherein sending the PRACH capability information to the network side device comprises:
sending UECapabilityInformation to the network side device, wherein the UECapabilityInformation carries the PRACH capability information.

45. The method according to claim 37, wherein the PRACH capability information comprises at least one of:
PRACH capability information supporting the multi-PRACH transmission of FDM;
PRACH capability information supporting the multi-PRACH transmission of TDM;
PRACH capability information supporting a PRACH transmission of FDM and TDM; or
PRACH capability information supporting FDM frequency hopping.

46. An apparatus for configuring a multi-physical random access channel (PRACH) transmission, comprising:
a transmitting module, configured to send a multi-PRACH transmission configuration to a terminal, wherein the multi-PRACH transmission configuration indicates a synchronization signal block (SSB) usage mode corresponding to a PRACH resource used by a terminal in sending a plurality of PRACH transmissions according to the multi-PRACH transmission configuration; and
a receiving module, configured to receive a plurality of PRACHs transmitted by the terminal over the PRACH resource in the SSB usage mode.

47. An apparatus for configuring a multi-physical random access channel (PRACH) transmission, comprising:
a receiving module, configured to receive a multi-PRACH transmission configuration sent by a network side device, wherein the multi-PRACH transmission configuration indicates a multiplexing mode adopted by the terminal in sending a plurality of PRACHs; and
a transmitting module, configured to send the plurality of PRACHs to the network side device in the multiplexing mode.

48. A network side device, comprising: a processor, and a memory for storing computer programs, when the computer programs stored in the memory are executed by the processor, the device is caused to perform the method according to any one of claims 1 to 40.

49. A terminal, comprising: a processor, and a memory for storing computer programs, when the computer programs stored in the memory are executed by the processor, the device is caused to perform the method according to any one of claims 41 to 45.

50. A communication device, comprising: a processor and an interface circuit, wherein
the interface circuit is configured to receive code instructions and transmit the code instructions to the processor; and
the processor is configured to run the code instructions to perform the method according to any one of claims 1 to 40.

51. A communication device, comprising: a processor and an interface circuit, wherein
the interface circuit is configured to receive code instructions and transmit the code instructions to the processor; and
the processor is configured to run the code instructions to perform the method according to any one of claims 41 to 45.

52. A computer-readable storage medium for storing instructions, wherein when the instructions are executed, the method according to any one of claims 1 to 40 is implemented.

53. A computer-readable storage medium for storing instructions, wherein when the instructions are executed, the method according to any one of claims 41 to 45 is implemented.
